# EUROPEAN PATENT APPLICATION

(11) **EP 2 180 731 A1**
(43) Date of publication of application: **28.04.2010**
(21) Application number: 08792530.1
(22) Date of filing: 18.08.2008
(51) Int. Cl.: H04W 4/00, H04B 17/00, H04M 3/00

(54) **RADIO COMMUNICATION SYSTEM AND METHOD**

(30) Priority: 16.08.2007 JP 2007212387
(71) Applicant: Nec Corporation, Tokyo 108-8001 (JP)
(72) Inventor: HAMABE, Kojiro, Tokyo 108-8001 (JP); LEE, Jinsock, Tokyo 108-8001 (JP)
(74) Representative: MacDougall, Alan John Shaw
(86) International application number: PCT/JP2008/064684
(87) International publication number: WO 2009/022752

(57) **Abstract**

A system and a method for avoiding the concentration of reports from mobile stations that met failure in a base station 2 or in a radio link due to entrance into a tunnel and that is re-connected to the network after such failure are disclosed. The base station determines a report execution probability of a mobile station 3 reporting to the base station a monitor result on the radio link acquired by the mobile station 3 in accordance with traffic on the radio link and/or the number of reports made on the monitor results. The mobile station prohibits or makes reporting to the base station in accordance with the large/ small relationship between a random number generated and the report execution probability. A management server 4 prohibits reporting from the mobile station on the cell basis or on the GPS location- cell pair basis.

## Description

### TECHNICAL FIELD

### (Reference to Related Application)

This application is based upon and claims the benefit of the priority of Japanese patent application No. 2007-212387 (filed on August 16, 2007), the disclosure of which is incorporated herein in its entirety by reference thereto.
This invention relates to a radio communication system and, more particularly, to a system and a method configured to control reports to a base station of a monitor result of communication states acquired at a mobile station.

### BACKGROUND ART

As mobile phones have come into widespread use, and services for personal communication has become diversified, there is an increasing demand for reducing costs of maintenance and adjustment for optimization in the mobile communication system. For example, transmission power and antenna tilt angle of a base station (see Patent Document 1) are objects of maintenance and adjustment for optimization in the mobile communication systems. Transmission power and antenna tilt angle are termed 'radio parameters'.

In general, maintenance and adjustment of a communication system are made on the basis of evaluation study using a radio network design simulator. To improve simulation accuracy, the information on a receiving state, as measured in a serving area of the radio communication system, and the position information, whose actual value has been measured, are input to the design simulator. In a CDMA (Code Division Multiple Access) radio communication system, reception quality and reception strength, for example, of a common pilot channel are used as information on a receiving state.

So far, the information on the receiving state has been measured by a dedicated measurement car or by a team of experts in measurement. There is also a method according to which the information on the receiving state is measured by a mobile radio terminal, owned by a user, and the so measured results are collected. In a configuration disclosed in Patent Document 1, a mobile radio terminal monitors communication status of a user communication. The communication state that satisfies a predetermined condition is detected as a trigger. On detection of such a trigger, the mobile radio terminal acquires a receiving state of a radio signal and a position thereof, and sends the measured information, inclusive of the receiving state and the position, to a management server (information collection server). The management server then internally records the measured information, received from the mobile radio terminal.

Patent Document 1:
   JP Patent Kokai Publication No. JP-P2004-166056 A
Non-Patent Document 1:
   "UE assistance for self-optimizing of network", 3GPP TSG-RAN WG2 R2-072432, 25-29, June 2007

### DISCLOSURE OF THE INVENTION

### PROBLEMS TO BE SOLVED BY THE INVENTION

The entire disclosures of abovementioned Patent Document 1 and Non-Patent Document 1 are incorporated by reference into the present application. Below, analysis of related technology according to the present invention is given.

In accordance with the disclosure of, for example, Patent Document 1, analysis is now made of a system in which the monitor result of the receiving state is reported is reported on an event-driven base from a mobile station to a management server via a base station.

In case of performing an event-driven reporting, if an event such as
· a radio link failure (radio link failure);
· handover failure (HO failure);
· throughput lowering; or
· pilot quality deterioration
   which meets with a predetermined condition, and which may become a trigger, has occurred in the communication state monitored by a mobile station, the mobile station advises the base station of the occurrence of such event.

By way of the monitor result, reported by the mobile station, the event type, receiving state and own position, for example, are sent. Or, as the receiving state and the information on the own position, the pilot receiving quality of the own cell and a neighbor cell, and the GPS (Global Positioning System) position information, are used. In addition, the temporary mobile station ID information (TMSI (temporary mobile subscriber identification); an identifier at L3(RRC)), the time information, and the like may be included in the report.

On receipt of the report from the mobile station, the base station transmits the report to the management server. The management server collects the report information to re-set radio parameters, such as the power or antenna tilt angle.

When the mobile station sends the monitor result of the communication state on the event basis to the base station, it may occur that communication is disabled due to a radio link failure or in a base station. In this case, the report buffered in the mobile station is transmitted to the base station when the link connection is re-established to enable the communication.

In case a radio link failure has occurred due to a base station failure or to passage through a tunnel, a plurality of mobile stations unanimously report to the base station on re-establishment of the link connection, and hence the traffic of the radio network abruptly increases. In particular, a number of reports may become concentrated at a tunnel exit or the like. Hence, the effect the reports might have on the network load may be said to be considerable.

However, the numerous reports sent at, for example, the tunnel exit from the mobile stations to the base station, that is, the report that a radio link failure occurred on entrance to the tunnel, does not contribute to optimizing the radio parameter. That is, if the management server alters the radio parameter of the base station based on these reports, the radio link failure in the tunnel may not be removed. Hence, these reports that a radio link failure has occurred on entrance to the tunnel may be said to be unneeded reports from the perspective of optimizing or adjusting the radio parameter. Rather, these unneeded reports, sent unanimously from the mobile station, increase the burden of the radio network, thus severely deteriorating communication services of other information. The same may be said of reports on a radio link failure ascribable to a base station failure.

Thus, to prevent the burden of the radio network from increasing, it is desirable to halt or suppress above-mentioned report.

The present invention has been invented based on above finding. It is an object of the present invention to provide a system and a method for avoiding concentration of reports from the mobile stations on re-establishment of a link connection following the occurrence of a radio link failure due to a base station failure or to entrance into a tunnel.

### MEANS TO SOLVE THE PROBLEMS

To solve the above problem, the invention disclosed in the present application may be summarized substantially as follows:

In one aspect of the present invention, there is provided a communication system comprising a first node, a second node, connected to the first node over a radio network, and a means that determines a probability of the first node reporting to the second node a monitor result of communication state acquired by the first node, based on traffic information on the radio network. The first node controls reporting on the monitor result to the second node based on the probability. In a mode according to the present invention, the first node is a mobile station, the second node is a base station, and the base station may include the means that determines the probability.

In another aspect of the present invention, there is provided a communication system comprising a first node and a second node connected to the first node over a radio network. The first node performs control in such a manner that, in case a first site where the first node acquired the monitor result of communication status and a second site where it has become enabled to report the monitor result to the second node are prescribed in the report prohibiting information received from the second node as being the subjects of report suppression of the monitor result, the reporting of the monitor result to the second node is prohibited. In one mode of the present invention, the first node may be a mobile station and the second node may be a base station. This base station may be provided with a management server that formulates the report prohibiting information. The base station may be configured to receive the report prohibiting information from the management server to broadcast the so received information.

A system according to the present invention includes a base station and a mobile station. The base station broadcasts a probability of the mobile station reporting the monitor result of communication status to the base station. The mobile station receives the probability broadcasted by the base station to report the monitor result to the base station in accordance with the probability received.

According to the present invention, the base station may decide the probability on the basis of uplink traffic from the mobile station to the base station.
The mobile station may report the monitor result to the base station based on the magnitude (large/small) relationship between the random number generated and the probability received from the base station.

According to the present invention, the base station may set the probability so that that it assumes a value ranging from 0 to 1. The base station may measure the uplink traffic and if the uplink traffic is more than a predetermined threshold value, the base station may set the probability to 0 to broadcast the so set probability to prohibit the mobile station from reporting.
The base station may set the probability to 1 if the uplink traffic is not more than a predetermined threshold value and the traffic of reports is less than another threshold value predetermined in relation with the number of reports made. The base station may then broadcast the so set probability to allow the mobile station to report the monitor result.
The base station may also set the probability to a value relatively close to 0 if the uplink traffic is not more than the predetermined threshold value and the traffic of reports is not less than above mentioned other threshold value. The base station may then broadcast the so set probability to cause the mobile station to suppress the reporting.

The mobile station generates, on receipt of the probability from the base station, a random number of a range of values that may be assumed by the probability.
In case the random number generated is less than the probability received from the base station, the base station makes the reporting.
In case the random number generated is not less than the probability received from the base station, the mobile station receives the probability from the base station and compares the probability to the random number generated, until such time that reporting is made within a predetermined maximum number of times of retry operations or such time that the maximum number of times of retry operations is reached as reporting is not made. The mobile station may stop the reporting in case the maximum number of times of retry operations is exceeded.

According to the present invention, the base station may alternately broadcast, as the probability, a predetermined first probability of a fixed value, and a second probability. The second probability may variably be set, after broadcasting the first probability, depending on the number of reports received from the mobile stations within a predetermined time as from the broadcasting of the first probability.

According to the present invention, the mobile station may wait for receipt of the first probability from the base station, on re-connection to the radio network, after occurrence of an event inclusive of a radio link failure, and make reporting in accordance with the first probability received.
The mobile station may then receive the second probability from the base station. In case the report has not been performed, the mobile station may then make the reporting in accordance with the second probability.

On receipt of the first probability from the base station, the mobile station may generate a random number in a range of values that may be assumed by the first probability. If the random number generated is less than the first probability, the mobile station may perform the reporting. The mobile station may receive the second probability from the base station in case the random number is not less than the first probability. The base station may generate a random number in a range of values that may be taken by the second probability. The base station may make the reporting in case the random number is less than the second probability. The base station may stop the reporting in case the random number is not less than the second probability.

In a system in another aspect of the present invention, a mobile station that met a radio link failure at a first site and that has been re-connected to the link at a second site may report monitor results of a radio link failure to a base station. The mobile station may suppress or halt reporting of the monitor result to the base station, based on an indication from the base station, if the combination of the first and second sites is such one that is for suppressing the reporting the monitor result to the base station.

According to the present invention, a means that may be provided for storing and managing, as the reporting prohibiting information, information to the effect that the combination of the first and second sites is such one that is for prohibiting the reporting from the mobile station to the base station.

According to the present invention, the site is defined on the cell basis, with the first and second sites being first and second cells, respectively.

According to the present invention, the first and second sites are first and second positions that are correlated with cells and that are defined in a range narrower than the cell.

According to the present invention, if, in case the mobile station has met a radio link failure at a first position and that has been re-connected to the radio network link at a second position, the first position has been entered as one of pair positions in the report prohibiting information broadcasted by the base station, with the second position being entered as being the other of the pair positions, the mobile station suppresses or stops reporting. These pair positions are those determined in the report prohibiting information as being the subjects for report suppression in connection with cells.

According to the present invention, the mobile station receiving an indication from the base station and suppressing the reporting may report in accordance with a predetermined probability.

According to the present invention, the monitor result may include the information on an event and/or measured results of the communication status.

In another mode of the present invention, a mobile station discards a report buffered therein in case a network indicates that reporting of measurement, which is related with a position in one cell and another position in another cell is not allowed.

According to the present invention, a mobile station which lost its connection to the network in passing through a tunnel may discard a report buffered therein, after the mobile station is re-connected to the network. Such discarding may be made on the basis of the report information from the base station to the effect that reporting between a cell where the base station has lost its connection to the network and another cell where the mobile station has been re-connected to the network is not allowed.

According to the present invention, the position of the one cell and that of another cell are indicated as a cell pair. Or, the position of the one cell and that of the other cell may be represented as a pair combination of a GPS (Global Positioning System) position and a cell.

According to the present invention, a failure in a cell may be managed on the basis of a report prohibited cell pair. A mobile station may discard a report buffered therein based on the information broadcasted by a base station to the effect that reporting between a cell pair inclusive of a cell where the mobile station has lost its connection to the network and another cell wherein the mobile station has been re-connected to the network is not allowed. According to the present invention, a cell or cells neighboring to a failed cell autonomously detect the failed cell by periodic health check among a plurality of base stations.

A method for radio communication according to the present invention may comprise a step of a base station broadcasting the probability of reporting to the base station of a monitor result of communication status by a mobile station, and a step of the mobile station receiving the probability broadcasted by the base station to report the monitor result to the base station in accordance with the probability.

In another method for radio communication according to the present invention, a mobile station that met a radio link failure at a first site and that has re-established connection to the link at a second site should report monitor results of a radio link failure to the base station. The method includes a step of the mobile station receiving an indication from the base station if the combination of the first and second sites is such one that is for suppressing the reporting of the monitor result of a radio link failure.
The method also includes a step of the mobile station suppressing or halting the reporting to the base station based on the indication.

According to the present invention, there is provided a mobile station comprising a means that monitors communication status, and a means that receives a probability broadcasted by the base station and for controlling reporting to the base station of the monitored result, in accordance with the probability received.

According to the present invention, there is provided a base station comprising a means that determines a probability of the mobile station reporting to the base station a monitor result of communication status acquired by the mobile station, based on uplink traffic from the mobile station to the base station, and a means that broadcasts the probability determined to the mobile station.

According to the present invention, there is provided a mobile station comprising a means that monitors communication status and a means that receives from a base station an indication indicating whether or not, in case a mobile station that met a radio link failure at a first site, has re-established connection to the link at a second site reports the monitor result of a radio link failure to a base station, the combination of the first and second sites is such one that is for suppressing the reporting to the base station of the monitor result of a radio link failure. The method also comprises a means that suppresses or stops the reporting of the monitor result in case the combination of the first and second sites is such one that is for suppressing the reporting of the monitor result, based on above mentioned indication.

According to the present invention, there is provided a base station comprising a means that broadcasts an indication to prohibit reporting and suppresses the reporting to a base station in case the combination of a first site where a radio link failure has occurred for a mobile station at the first site and a second site where the mobile station has been re-connected to the link after the failure occurred is registered in the report prohibiting information as being the combination that is for suppressing the reporting to the base station at the second site. It should be noted that the mobile station, if left as it is in the second site, would perform the reporting in the second site.

According to the present invention, if a cell has disappeared due to a failure in a base station, the base station or base stations around the failed cell may detect the failure to add the cell that disappeared to a group of the report prohibited cells.

According to the present invention, if a base station has deleted a cell (stopped transmission over a common pilot channel), the base station may notify the near-by base station or base stations of that effect. The near-by base station or base stations may then add the deleted cell to the group of the report prohibited cells.

According to the present invention, if a base station (or a management server) has received numerous reports of the same content (the reports with the same event sort and the same occurrence site), the base station or the management server may broadcast that the reports of the contents are unneeded. The combinations of the report-prohibited cell numbers and the report-prohibited positions may then be automatically generated from the reports of the contents from one event sort to another.

If, in the present invention, the management server deletes the report prohibited cells from the list of the report-prohibited information, control may be managed so that the probability will progressively increase from 0 to reach 1 ultimately.

According to the present invention, there is provided a base station or a management server which causes a mobile station to discard the report buffered therein if a report on measurements related to a position of a given one cell and a position of another cell is not allowed. According to the present invention, in case a mobile station that lost its connection to the network in passing through a tunnel is re-connected to the network, the information to the effect that a report on a cell pair (cell wherein the mobile station loses its connection to the network and another cell wherein the mobile station is re-connected to the network) is not allowed, is broadcasted to the mobile station. The mobile station is then caused to discard the report buffered therein. According to the present invention, the position of a given one cell and a position of another cell may be indicated by a cell pair, or by a combination pair of a GPS (Global positioning System) position and a cell. According to the present invention, there is provided a base station (management server) that manages the cell failure in terms of a report prohibited cell pair. The base station (management server) broadcasts to the mobile station the information that reporting between a cell wherein the mobile station loses its connection to the network and another cell wherein the mobile station is re-connected to the network is not allowed. The mobile station is then caused to discard the report buffered. According to the present invention, neighbor cells may autonomously detect a failed cell by periodic check.

### MERITORIOUS EFFECTS OF THE INVENTION

According to the present invention, even in case a radio link failure ascribable to failure in a base station or passage through a tunnel has occurred, it is possible to avoid concentration of reports from mobile stations re-connected to the link.

### BRIEF DESCRIPTION OF THE DRAWINGS

Fig.1 is a diagram showing a mode of the present invention.
Fig.2 is a diagram showing another mode of the present invention.
Fig.3 is a diagram showing the system configuration according to an exemplary embodiment of the present invention.
Fig.4 is a diagram showing the configuration of a base station according to an exemplary embodiment of the present invention.
Fig.5 is a diagram showing the configuration of a mobile station according to an exemplary embodiment of the present invention.
Fig.6 is a diagram showing the configuration of a management server according to an exemplary embodiment of the present invention.
Fig.7 is a flow chart showing an example sequence of determining the report execution probability in a base station in an exemplary embodiment of the present invention.
Fig.8 is a flow chart showing an example sequence of report transmission in a mobile station in an exemplary embodiment of the present invention.
Fig.9 is a flow chart showing another example sequence of determining the report execution probability in a base station according to an exemplary embodiment of the present invention.
Fig. 10 is a flowchart showing another example sequence of report transmission in a mobile station in an exemplary embodiment of the present invention.
Fig. 11 is a diagram showing a sequence of transmission of a report execution probability from a base station and a sequence of transmission of a report of a mobile station according to an exemplary embodiment of the present invention.
Figs. 12A to 12C illustrate the control for cell-based report transmission from a mobile station in another exemplary embodiment of the present invention.
Fig.13 is a flowchart showing an example sequence of cell-based report transmission from a mobile station in another exemplary embodiment of the present invention.
Figs.14A and 14B illustrate the control of cell-plus-position based report transmission from a mobile station in another exemplary embodiment of the present invention.
Fig.15 is a flowchart showing an example sequence of cell-plus-position based report transmission from a mobile station in another exemplary embodiment of the present invention.
Fig.16 is a diagram showing signaling flow of a SON measurement report.
Fig.17 is a diagram showing the present invention.
Figs.18A and 18B are diagrams illustrating the control for GPS-plus-cell pair based SON measurement report.
Fig.19 is a diagram showing the control for cell pair based SON measurement report.
Fig.20 is a diagram showing the signaling flow of discarding of the SON measurement report.

### EXPLANATIONS OF SYMBOLS

- 1: gateway
- 2, 2', 2", 2-1 to 2-n: base stations
- 3: mobile station
- 4: management server
- 5-1 to 5-n: cells
- 6: cell group
- 20, 21: antennas
- 21, 31: radio transmitting/ receiving units
- 22, 32: received data processing units
- 23, 33: transmission data processing units
- 24: S1 transmitting/ receiving unit
- 25: measurement indicator generating unit
- 26: report indicator generating unit
- 34: buffer unit
- 35: link connection control unit
- 36: GPS receiving unit
- 37: measurement control unit
- 38: measurement data storage unit
- 39: measurement data report control unit
- 41: measurement indicator control unit
- 42: data storage unit
- 43: transmitting/ receiving unit
- 44: parameter optimization calculation unit
- 45: parameter re-setting indication unit

### PREFERRED MODES FOR CARRYING OUT THE INVENTION

The present invention will now be described in more detail with reference to the drawings. The basic principle of the present invention will be described first and exemplary embodiments of the invention will then be described.

In a radio communication system according to the present invention, the base station broadcasts the probability of reporting of a monitor result. This probability, termed a report execution probability, is denoted by 'Prep' in the present specification. The mobile station reports in accordance with the report execution probability. The report execution probability = 1 means performing the report. On the other hand, if the report execution probability = 0, the reporting is stopped. In addition, if the report execution probability = 0.1, a report is transmitted with a probability of 10% per trial (and hence a report is not made with a probability of 90%, that is, substantially no report is made.

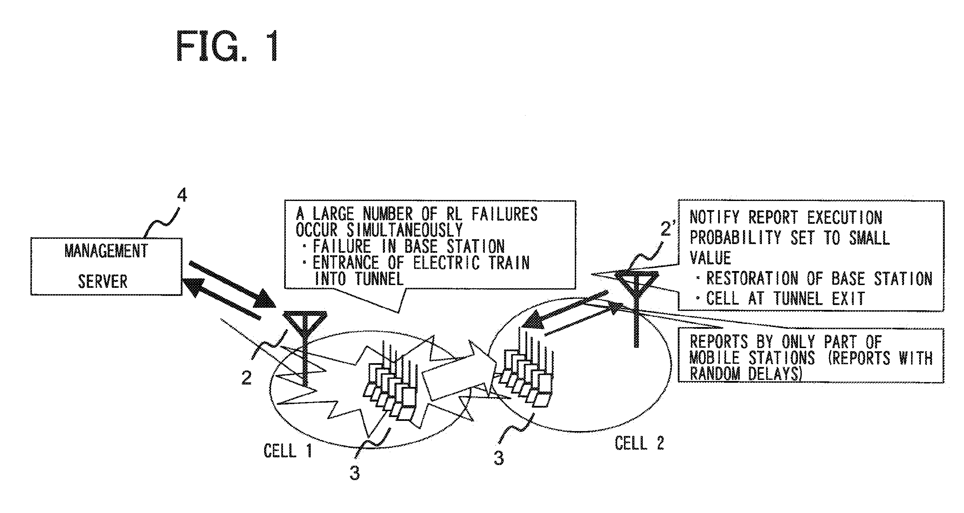

Fig.1 schematically shows the operating principle according to an aspect of the present invention. Referring to Fig.1, a large number of mobile stations undergo radio link failures when a base station has failed or when a vehicle such as an electric train, enters a tunnel. At the time of recovery from failure of the base station, or at a tunnel exit, the mobile station is re-connected to the base station 2'. At this time, the base station 2' broadcasts a report execution probability which has been set to a lower value. It is thereby possible to avoid a burden of the radio network from increasing due to the unanimous transmission of a large number of reports from the mobile stations 3 to the base station. Alternatively, the reports from the mobile stations are delayed at random to disperse the report transmission timing. Or, the number of times to retry report transmission may be set to a smaller value to allow reporting by only a part of the mobile stations. By such control operations, it is possible to avoid concentration of reports (avoid the burden of the radio network from increasing due to report transmission). A management server 4 may issue an indication for measurement via a base station to the mobile station, or receive a report which has been radio-transmitted from the mobile station to the base station to optimize or adjust radio parameters. In one aspect of the present invention, it is possible to avoid concentration of reports from the mobile station to the management server 4 on re-connection to the network after the occurrence of a radio link failure at the mobile station.

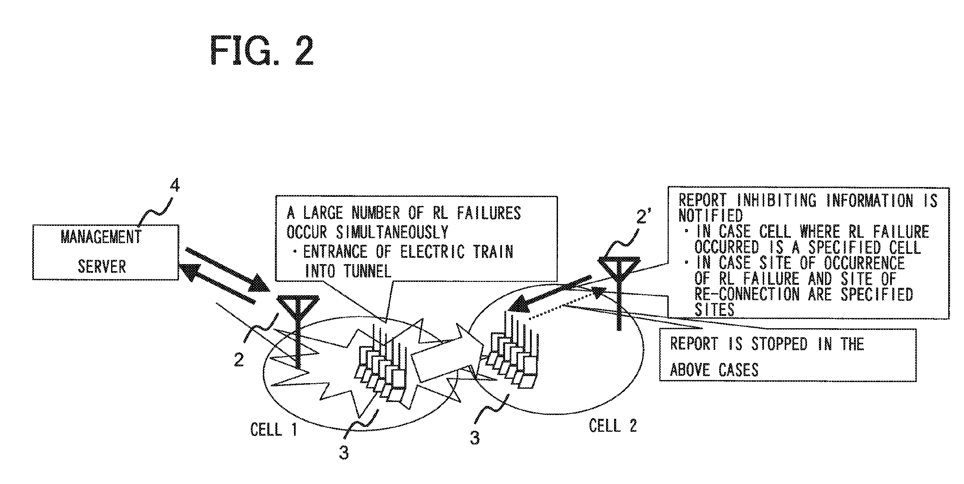

Fig.2 schematically shows the operating principle according to another aspect of the present invention. Referring to Fig.2, the base station 2' broadcasts report prohibiting information. This report prohibiting information includes the information that prescribes the relationship between a cell where a radio link failure occurs and a cell of re-connection (cell where reporting is made possible) or the relationship between a site where a radio link failure occurs and a site of re-connection (site where reporting is made possible). If the cell or site where a radio link failure has occurred and the cell or site of re-connection are those defined in the report prohibiting information, the mobile station 3 prohibits the reporting. By such control, it is possible to avoid concentration of reports (avoid a load of the network from increasing). Meanwhile, if reporting is to be suppressed, reporting may be probability-controlled based on above mentioned report execution probability. In the other aspect of the present invention, the concentration of reports to the management server 4 may similarly be avoided at the time of re-connection of mobile stations to the network after occurrences of radio link failures at the mobile stations. The present invention will now be described with reference to exemplary embodiments.

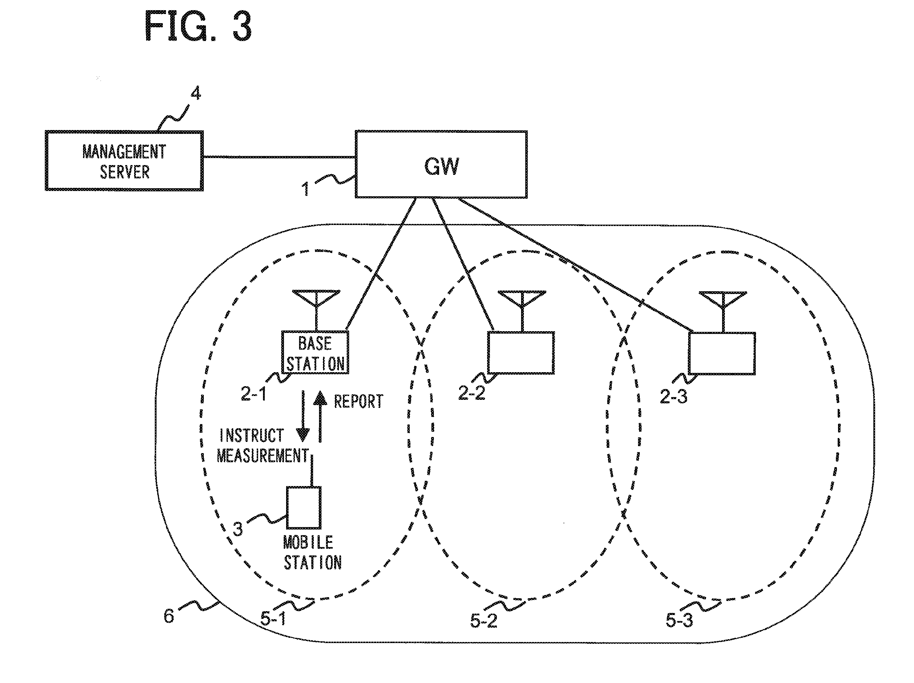

Fig.3 shows a system configuration of an exemplary embodiment of the present invention. Referring to Fig.3, the system of the present exemplary embodiment includes a plurality of base stations (2-1, 2-2 and 2-3), a gateway (GW) which is connected to the base stations, and a management server 4 which is connected to the gateway 1.

The base station, responsive to a measurement indicator from the management server 54, notifies the measurement indicator to the base stations which are placed under its control. The measurement indicators include period-type, event-type and on-demand type measurements, in a non-limiting meaning. With the period-type, the mobile station 3 periodically reports monitor results. With the on-demand type, the mobile station reports pilot reception quality of the own cell and neighbor cells, the GPS location information, the transient mobile station ID information (TMSI), the time and so forth at a time point of receipt of the measurement indicator.

With the event-type, the report information that the mobile station 3 sends to the base station, includes, when an event occurs, the sort of the event that has occurred, the reception quality of a pilot signal at the own cell and the neighbor cells, the GPS location information, the transient mobile station ID information (TMSI), the time and so forth. In the following explanation, the event-type will be described as an example.

In the present exemplary embodiment, the base station 2-1 may fail in a cell 5-1, or the base station 3 may be moved and, after it met a radio link failure in e.g., a tunnel, it may move to a cell 5-2. In this case, the mobile station is controlled, on re-connection, so that no report information will be sent, or the probability of report transmission will become lower. In this case, the mobile station may delay the transmission timing of the report information e.g., at random to avoid congestion of the report transmission. The mobile station may manage back-off control to render the delay at the time of re-trial of reporting variable. Or, the mobile station may reduce the number of times of trials (Nmax) in radio communication with the base station. By performing such control, it is possible to avoid concentration of reports from mobile stations. There may further be obtained an advantage that reports from the mobile stations may be scheduled to occur at a timing corresponding to a low burden of a radio network.

As explained with reference to Fig.1, the base station may set the report execution probability (Prep) at the mobile station 3 depending on, for example, an uplink radio traffic amount.

For example,
· if the uplink radio traffic is not lower than a first threshold value, the report execution probability (Prep) is set to zero;
· if the uplink radio traffic is not higher than a second threshold value, providing that the second threshold value < first threshold value, the execution probability (Prep) is set to unity; and
· if the uplink radio traffic is somewhere between the first and second threshold values, the execution probability (Prep) is set to a predetermined value between zero and unity;
   and the execution probability (Prep), thus determined, is notified to the mobile station.

As a downlink common channel used for transmission of the execution probability (Prep), a paging channel (PCH) used for example for transmission of a paging signal, or a forward access channel (FACH) used for transmission of the control information and user data, may be used. It should be noted however that the present invention is not limited to this configuration.

On occurrence of an event, such as a radio link failure or the like, the mobile station 3 holds the monitor result of the event in a buffer. On a link re-connection, the mobile station 3 does not instantaneously report the monitor result, but waits for the reception of the execution probability (Prep) which will be transited from the base station. On receipt of the execution probability (Prep), the mobile station generates a random number. The mobile station execute the report transmission in case the random number generated is less than the execution probability (Prep).

If conversely the random number is not less than the execution probability (Prep), the mobile station waits until the next execution probability (Prep) is received. On receipt of the next execution probability (Prep), a random number is generated and, if the random number generated is less than the execution probability (Prep), the report transmission is executed. Control proceeds in this manner. The sequence of operations thus comprises waiting for receipt of the next execution probability (Prep), generating a random number and comparing the so generated random number with the execution probability (Prep). This sequence of operations is continued until such time that a reporting is made within the maximum number of times of retries, or such time that the number of times of the reties is exceeded with the report not being transmitted. The report transmission is stopped when the number of times of the reties has exceeded the maximum value.

In the present exemplary embodiment, the execution probability (Prep), broadcasted by the base station, may be increased stepwise from a minimum value (initial value) depending on the number of reports received, although this is merely illustrative and is not intended to limit the present invention. In such case, the mobile station makes trial reports, beginning from the smallest execution probability (Prep) on occurrence of an event exemplified by a radio link failure. In determining the execution probability (Prep), the base station may performs dynamic variable control of the execution probability (Prep) in the increasing or decreasing direction in accordance with e.g., the number of times of reception of the reports. For example, it is supposed that, in dynamically controlling the execution probability (Prep), the base station receives the report information from the mobile station for a predetermined time interval during which the base station broadcasts the smallest value (initial value) of the execution probability (Prep). As a result of receipt of a smaller number of reports from the mobile stations, the value of the execution probability (Prep) was set to a value close to unity. However, the number of times of reports from the mobile stations is then increased. In such case, the value of the execution probability (Prep) may be set to a value smaller by a predetermined value from the previous value of the execution probability (Prep), by way of performing dynamic variable control of the execution probability (Prep).

Referring to Fig.3, another exemplary embodiment will now be described. In Fig.3, the base station may be configured to broadcast the report prohibiting information, as described with reference to Fig.2. The number of radio link failures, which occur at the time of entrance to a tunnel, may not be decreased by optimizing e.g., radio parameters, as set out above. Hence, the management server 4 is not in need of the corresponding report information. On the other hand, the probability is high that larger numbers of reports become concentrated at the exit of the tunnel, and hence the load of the network is necessarily increased. To prevent the load of the network from increasing due to the concentration of unneeded report information, the base station broadcasts the report prohibiting information. By so doing, reports at the tunnel exit regarding the occurrence of events such as a radio link failure at the tunnel entrance may be stopped or suppressed.

In a cell at the tunnel exit, the base station of the cell broadcasts to mobile stations an ID of the cell at the tunnel entrance as the report prohibiting information. If the ID of the cell, where a radio link failure has occurred, is coincident with the cell ID broadcasted by the base station, the mobile station stops its reporting. It is noted that this technique is not necessarily valid in case the cell at the tunnel entrance is the same as that at the tunnel exit.

To cope with this, the present exemplary embodiment is directed to another technique, according to which the base station broadcasts the position information at the tunnel entrance and that at the tunnel exit as being the report prohibiting information. If the position of occurrence of a radio link failure and the position of re-establishment of the link connection coincide with the tunnel entrance position and the tunnel exit position, respectively, the mobile station stops its reporting. It should be noted that the mobile station periodically gets and holds the own position information, such as its GPS location, as from the time before occurrence of the radio link failure.

As a down link common channel used for transmitting the report prohibiting information, a paging channel (PCH) used for example for transmitting a paging signal, or a forward access channel (FACH) used for transmitting the control information and user data, may be used. However, this configuration is not intended to restrict the scope of the present invention. The report prohibiting information may also be transmitted over a dedicated channel individually allocated to the mobile station at the time of the downlink connection.

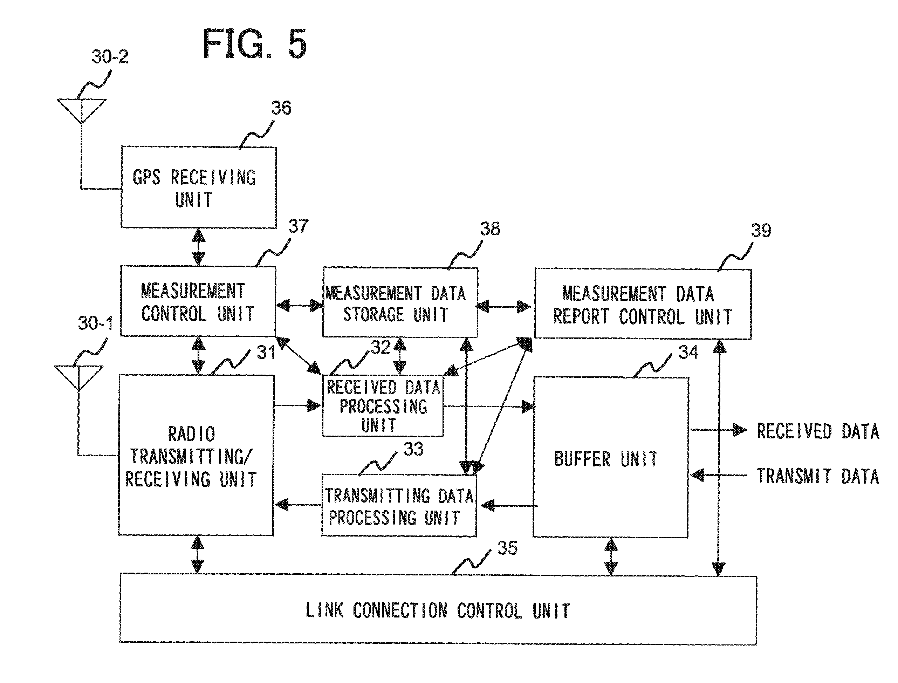

The base station, mobile station and the management server of the system shown in Fig.3 will now be described with reference to Figs.5 to 7. The configuration, now described, is illustrated as blocks according to the functions demonstrated in order to assist in the understanding. It should be noted that the configuration shown is not intended to restrict the scope of the invention.

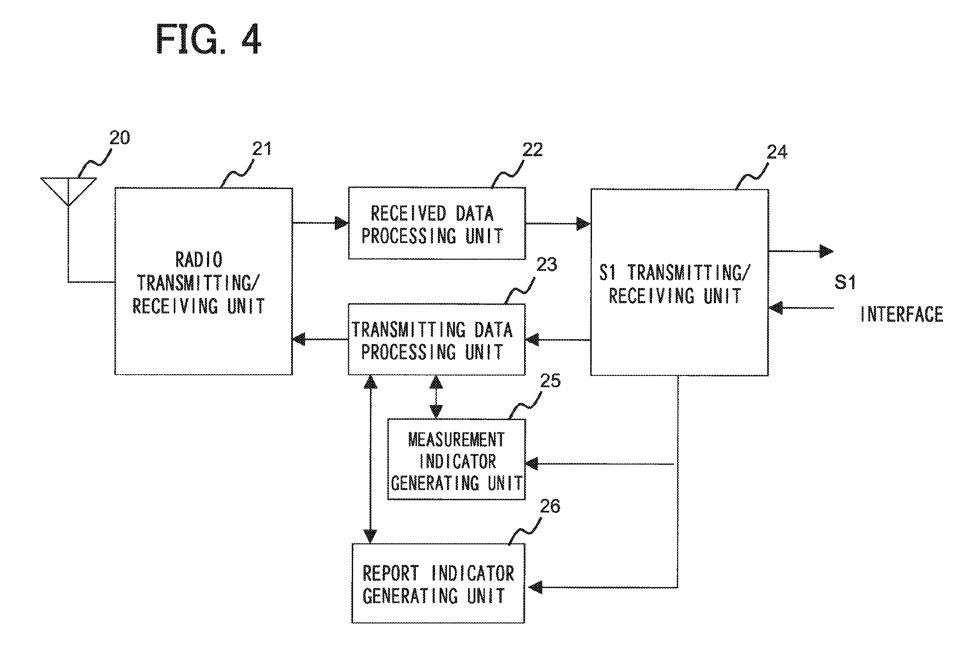

Fig.4 shows an example configuration of the base station. Referring to Fig.4, the base station includes an antenna 20, a radio transmitting/ receiving unit 21, a received data processing unit 22, a transmission data processing unit 23, an S1 transmitting/ receiving unit 24, a measurement indicator generating unit 25 and a report indicator generating unit 26. The respective components substantially include the following functions:

The transmission data processing unit 23 corrects the transmission data for errors and modulates the data. In the case of CDMA, the received data processing unit spreads the spectrum of the data by a spreading code. The received data processing unit 23 then converts the data to an analog signal.

A transmitter part, not shown, of the radio transmitting/receiving unit 21 orthogonally modulates the transmission data from the transmission data processing unit 23 to generate an orthogonally modulated intermediate frequency signal (IF signal). This intermediate frequency signal is converted to a high frequency signal (RF signal). This RF signal is power-amplified, and the amplified signal is supplied to an antenna 20 via a duplexer, not shown. The signal received by the antenna 20 is supplied to a receiver, not shown, of the radio transmitting/ receiving unit 21 via the duplexer, not shown. The receiver, not shown, of the radio transmitting/ receiving unit 21 amplifies the received signal and frequency-converts the signal into an IF signal. The receiver orthogonally demodulates the IF signal, and the demodulated signal is then supplied to the received data processing unit 22.

The received data processing unit 22 converts the received signal (analog signal) to a digital signal. In the case of CDMA, the signal is inverse-spread by applying an inverse spread-spectrum technique, using the same spreading code as that used for the received signal, and is processed with rake synthesis. The resulting signal is then subjected to data demodulation, error correction and decoding. The received data processing unit 22 then transmits the report information of the monitor result of the received data via the S1 transmitting/ receiving unit 24 and the gateway (1 of Fig.3) to the management server (4 of Fig.3).

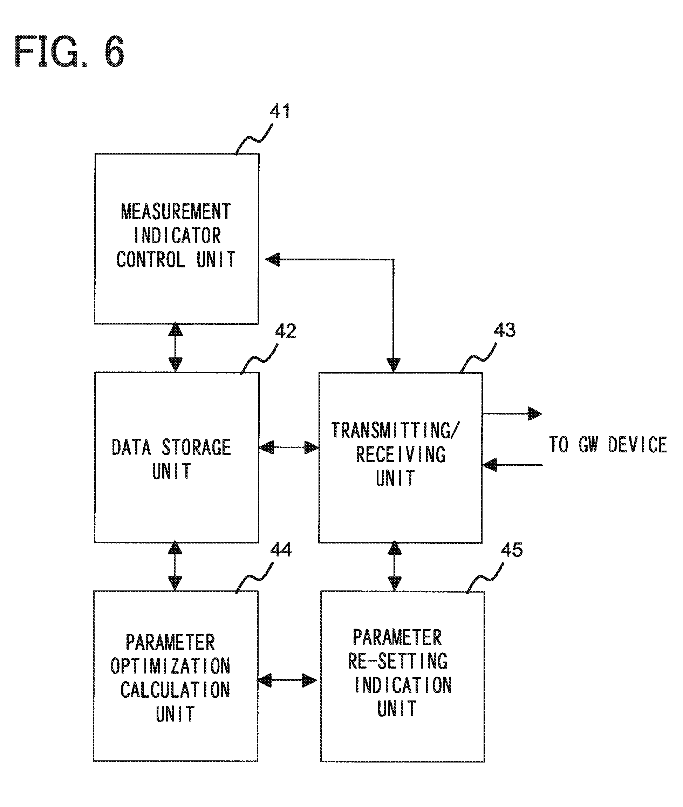

The measurement indicator generating unit 25 generates a measurement indicator that is to be transmitted to the mobile station. That is, the measurement indicator generating unit 25 generates a measurement indicator to a mobile station that has established a radio link in a cell, which has become the subject of measurement, based on a measurement indicator issued by the management server 4. It should be noted that the measurement indicator is to include at least the cell being measured and items of measurement, such as a radio link (RL) failure. The management server 4 will be described later with reference to Fig.6.

The report indicator generating unit 26 sets the execution probability (Prep), for example and broadcasts the execution probability (Prep) via the transmission data processing unit 23 and the radio transmitting/ receiving unit 21 to the mobile station. The setting of the execution probability (Prep) by the report indicator generating unit 26 will be described later in detail.

Fig.5 shows an example configuration of the mobile station. Referring to Fig.5, the mobile station includes a radio transmitting/receiving unit 31, a received data processing unit 32, a transmission data processing unit 33, a buffer unit 34, the link connection control unit 35, a GPS receiving unit 36, a measurement control unit 37, a measurement data storage unit 38 and a measurement data report control unit 39. These respective components substantially include the following functions:

The buffer unit 34 stores transmission data and received data. It should be noted that the buffer unit 34 is configured as one unit, only for simplicity for explanation, and the buffer unit may, of course, be formed by an independent transmission data buffer and an independent received data buffer.

The transmission data, stored in the buffer unit 34, is subjected to error correction and encoding and data modulation in the transmission data processing unit 33. In the case of CDMA, the data is spread by a spreading code and the resulting data is converted to an analog signal. A transmission unit, not shown, of the radio transmitting/ receiving unit 31 orthogonally modulates the transmission data from the transmission data processing unit 33 to generate an orthogonally modulated intermediate frequency signal (IF signal). This IF signal is frequency-converted to a high frequency signal (RF signal). The RF signal is then power-amplified and supplied via a duplexer, not shown, to an antenna 30-1. A receiving unit, not shown, in the radio transmitting/ receiving unit 31, receives an RF signal from the antenna 30-1 via a duplexer, not shown, and amplifies the received signal. The so amplified RF signal is frequency-converted and then orthogonally demodulated and the resulting signal is supplied to the received data processing unit 32.

The received data processing unit 32 converts the received signal to a digital signal. In the case of CDMA, the signal is inverse-spread by applying an inverse spread-spectrum technique, using the same spreading code as that used for the received signal, and is processed with e.g., rake synthesis. The resulting signal is then subjected to data demodulation, error correction and decoding so as to be then stored in the buffer unit 34. The received data, transiently stored in the buffer unit 34, is read out therefrom so as to be used for particular applications.

The link connection control unit 35 performs control in connection with establishment of connection of the link, re-transmitting in case of occurrence of errors, such as timeouts, maintenance of connection and passed through a tunnel and lost its connection to the networking between it and the base station.

The GPS receiving unit 36 receives signals from GPS satellites over an antenna 30-2 to calculate the position information, such as longitude, latitude or height.

The measurement control unit 37 measures (monitors) communication status, such as a receiving state, based on a measurement indicator from the base station received by the radio transmitting/ receiving unit 31. The measured result (monitor result) is stored in the measurement data storage unit 38. If, in case the measurement is made under an event-base, an event that may serve as a trigger, such as a radio link failure, has occurred, the measured result or the monitor result, the position information of the mobile station, acquired by the GPS receiving unit 36, the mobile station ID information (TMSI), the time information and the like are stored in association with the event that has occurred, for subsequent reporting.

The measurement data report control unit 39 performs control of allowing for or prohibiting the transmission of a report of a monitor result based on the link connection state of the link connection control unit 35 or on the execution probability (Prep) received. The transmission data processing unit 33 receives an indicator from the measurement data report control unit 39, that is, an indicator as to whether or not the reporting on the monitor result is to be allowed or prohibited. If the report on the monitor result is to be made, the monitor result, the GPS location information, the transient mobile station ID information (TMSI), the time and so forth when an event occurs, for example, as stored in the measurement data storage unit 38, is read out. The information is combined with the transient mobile station ID information (TMSI), for example, and is transmitted as a report from the radio transmitting/ receiving unit 31.

Fig.6 shows an example configuration of the management server 4 of Fig.3. Referring to Fig.6, the management server 4 includes a measurement indicator control unit 41, a data storage unit 42, a transmitting/ receiving unit 43, a parameter optimization calculation unit 44 and a parameter re-setting indication unit 45. The respective components include substantially the following functions:

The measurement indicator control unit 41 issues a measurement indicator via the base station to the mobile station. The measurement indicator includes the information indicating which type of a period-base, an event-base and an on-demand base, is to be used for measurement. The measurement indicator also includes items to be measured.

A measurement indicator from the measurement indicator control unit 41 is transmitted from the transmitting/ receiving unit 43 to a gateway (GW device) (1 of Fig.3) and thence transferred to the base station. The measurement indicator is notified from the base station via a radio route to the mobile station in the cell.

The transmitting/ receiving unit 43 receives the report information from the mobile station via the base station and the gateway (GW device) (1 of Fig.3) to store the report information received in the data storage unit 42. The measurement indicator control unit 41 also causes the list of the report prohibiting information, formulated in a management server, to be stored therein for management.

The parameter optimization calculation unit 44 reads the report information from the data storage unit 42 to make calculations for optimization on radio parameters, such as power of the relevant base station, antenna tilt angle, or the like, based on the report information. In case the radio parameters, newly calculated in the parameter optimization calculation unit 44, differ from those already set, the parameter re-setting indication unit 45 sends a parameter re-setting indicator via the gateway (1 of Fig.3) to the base station. Based on the parameter re-setting indicator, the base station sets the power, antenna tilt angle or the like.

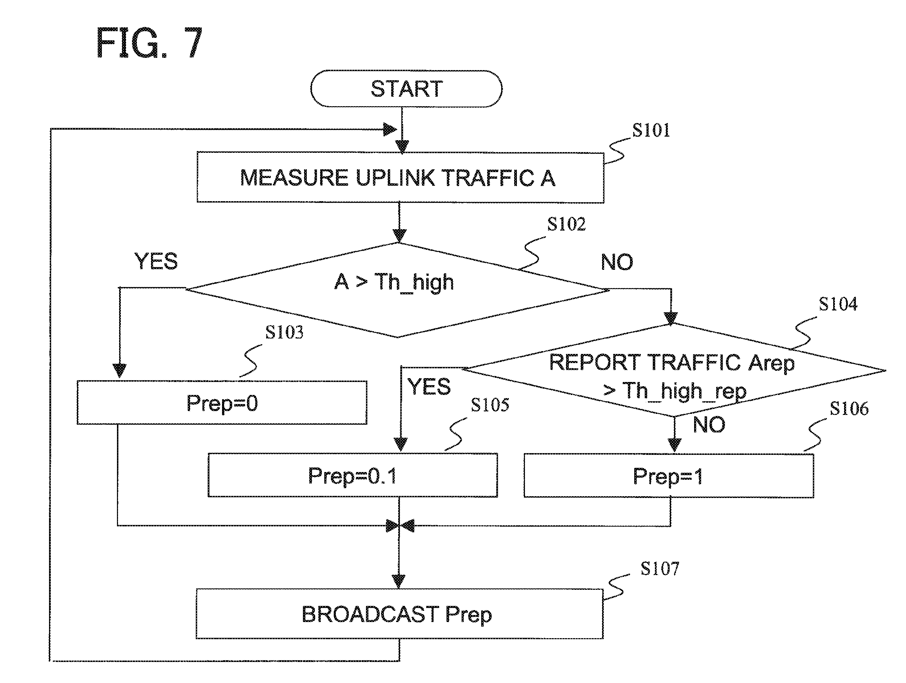

Fig.7 depicts a flow chart showing an example sequence of determining the report execution probability Prep in the base station. The example sequence of determining the report execution probability Prep in the base station will now be described with reference to Fig.7 and to Fig.4 that shows the configuration of the base station.

The base station measures the traffic A of an uplink from the mobile station by the report indicator generating unit 26 (step S101). The measurement of the traffic A of the uplink from the mobile station is executed by the report indicator generating unit 26 which measures amount of data received by the radio transmitting/ receiving unit 21 and the received data processing unit 22 for a preset unit time by a timer, not shown.

If, as a result of measurement of the traffic A of the uplink, the traffic A of the uplink is more than the threshold value Th_high (YES branching of a step S102), the report indicator generating unit 26 sets Prep = 0 (step S103). That is, in case of the large traffic of the uplink, the report indicator generating unit 26 sets Prep = 0 to prohibit the reporting from the mobile station.

In case the traffic A of the uplink is not more than the threshold value Th_high (NO branching at the step S102) and a report traffic Arep is more than Th_high_rep (YES branching at the step S104), the report indicator generating unit 26 sets Prep = 0.1 (step S105). That is, in case the traffic of the uplink is not more than the threshold value Th_high but the number of reports is of a large value, the report indicator generating unit 26 sets Prep to a smaller value to suppress the transmitting of the reports. Meanwhile, the report traffic Arep is measured by measuring the number of reports, received by the radio transmitting/ receiving unit 21 and the received data processing unit 22, by the report indicator generating unit 26 for a predetermined unit time with a timer, not shown.

In case the report traffic Arep is not more than Th_high_rep (NO branching at the step S104), the report indicator generating unit 26 sets Prep = 1 (step S106).

The base station broadcasts Prep, determined by the report indicator generating unit 26, via the transmission data processing unit 23 and the radio transmitting/ receiving unit 21 (step S107).

In determining the execution probability (Prep) by the report indicator generating unit 26, it is possible to further increase the numbers of threshold values to enable finer stepwise variable adjustment of Prep values. Or, the report execution probability Prep may be defined as being the function of the traffic A of the uplink and the report traffic Arep. The traffic A of the uplink in its entirety and/or the report traffic Arep may each be divided into a number of sections, and associated values of Prep may be stored in a lookup table. The values of Prep associated with measured traffic values may then be acquired from the lookup table.

The mobile station, which has received the execution probability (Prep) from the base station, may delay the reporting at random to transmit the so delayed reports. It is thus possible to elevate the probability that the reports are transmitted to the base station without reports from a plurality of mobile stations from temporally overlapping with one another.

If a report from a given mobile station is not completed within a predetermined time, the mobile station may stop its reporting. If, in case of occurrence of an event of a radio link failure, the reporting traffic from the mobile stations is increased, the execution probability (Prep) is made smaller, so that the report may not be completed within a predetermined time. Such event of the radio link failure may be exemplified by a base station failure, for which a report is unnecessary, or by a mobile station passing through a tunnel, for which a report is not useful. By arranging so that, in case a report is not completed within a predetermined time, the reporting is stopped, it is possible to reduce the number of unnecessary reports.

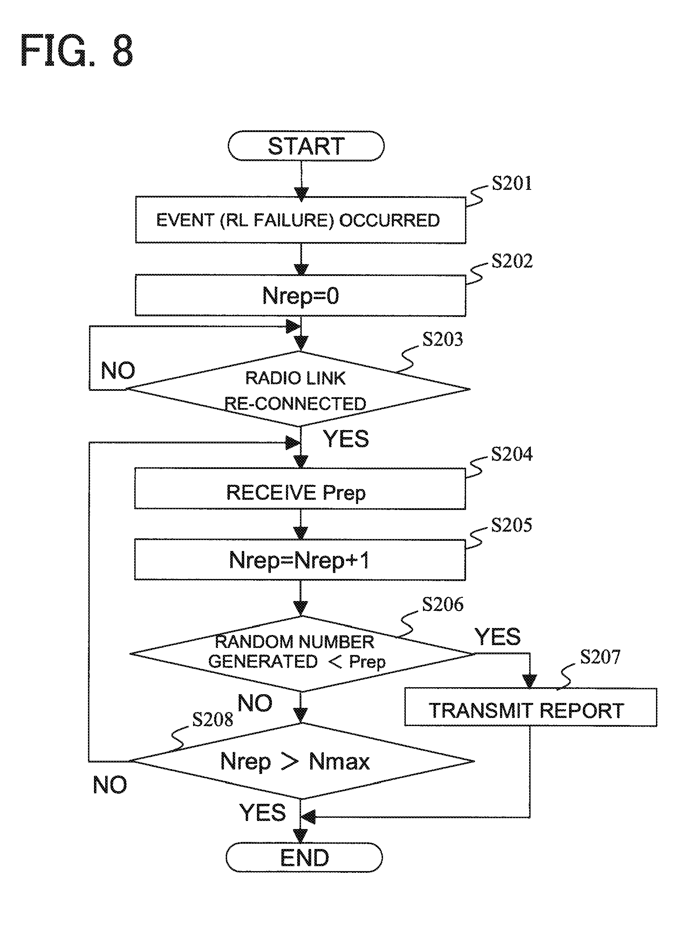

Fig.8 depicts a flowchart showing the sequence of transmitting of the report by a mobile station. Specifically, Fig.8 shows an event-based report transmission sequence in which, in case an event, which may become a trigger for reporting, has occurred, the report is transmitted from the mobile station via the base station to the management server. The report transmission sequence for the mobile station will now be described with reference to Fig.8 and to Fig.5 that shows the configuration of the mobile station.

An event that is to become a trigger for reporting (a radio link failure) occurs in a mobile station (step S201). In the mobile station, an event, such as a loss of loss of link connection (a radio link failure), is detected by, for example, the link connection control unit 35, and notified to the measurement data report control unit 39. The sort of the event that has occurred (a radio link failure), a measured result of the communication state at the time of the occurrence of the event, measured by the measurement control unit 37, the position information of the mobile station acquired by the GPS receiving unit 36, the mobile station ID information (TMSI), the time information and so forth, are stored in the measurement data storage unit 38, under control by the measurement data report control unit 39.

The measurement data report control unit 39 of the mobile station sets a count value Nrep, representing the number of retry operations for a report, to 0 (step S202).

When the connection of the radio link is re-established (YES branching of the step S203), the link connection control unit 35 informs the measurement data report control unit 39 of that effect. The measurement data report control unit 39 is then in a state of waiting for reception of the execution probability (Prep) broadcasted by the base station. When the received data processing unit 32 has received the execution probability (Prep) from the base station, via the radio transmitting/ receiving unit 31 (step S204), the measurement data report control unit 39 increments the count value Nrep by one (step S205).

The measurement data report control unit 39 of the mobile station generates a random number and determines whether or not the so generated random number is less than the execution probability (Prep) (step S206).

When the random number is less than the execution probability (Prep), the measurement data report control unit 39 of the mobile station transmits a report, stored in the measurement data storage unit 38, via the transmission data processing unit 33 and the radio transmitting/ receiving unit 31 to the base station (step S207).

When the random number is not less than the execution probability (Prep), and the count value Nrep is not more than the maximum value Nmax (NO branching of step S208), the measurement data report control unit 39 does not transmit a report. The processing from the step S204 of receiving the execution probability (Prep), broadcasted by the base station, via the radio transmitting/ receiving unit 31 by the received data processing unit 32, is repeated.

If, in the measurement data report control unit 39 of the mobile station, the count value Nrep has exceeded the maximum value Nmax (YES branching at the step S208), retry operations are not performed to stop the reporting.

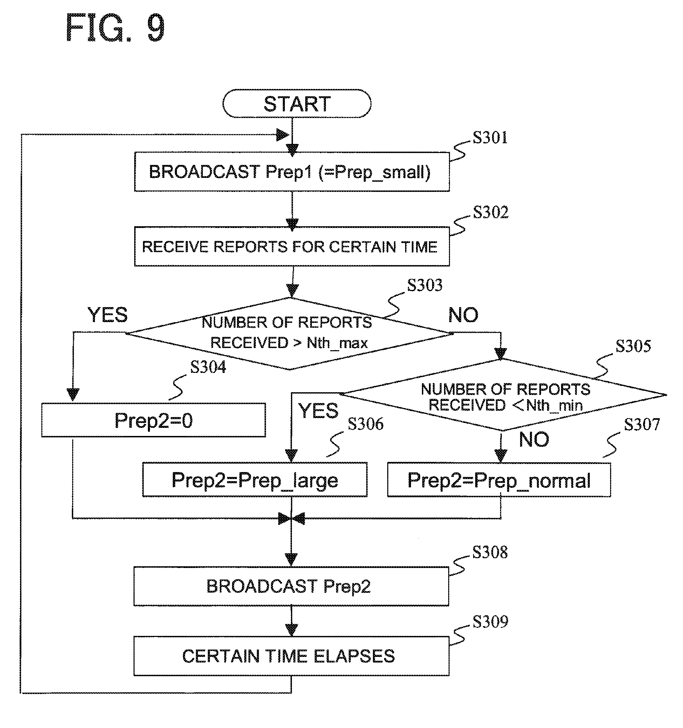

Fig.9 depicts a flow chart showing another sequence of determining the report execution probability in the base station. The sequence of determining the report execution probability Prep in the base station will now be described with reference to Fig.9 and to Fig.4 that shows the configuration of the base station.

The report indicator generating unit 26 of the base station broadcasts a first report execution probability Prep1, a pre-set small value, via the transmission data processing unit 23 and the received data processing unit 21 (step S301).

The received data processing unit 22 of the base station receives a report from the mobile station via the received data processing unit 21 for a predetermined time (step S302). Meanwhile, the predetermined time is measured by a timer, not shown, performing the time management.

When the number of received reports is not less than a maximum threshold value Nth_max (YES branching of a step S303), the report indicator generating unit 26 of the base station sets a second report execution probability Prep2 to 0.

When the number of reports received is not more than the maximum threshold value Nth_max (NO branching of a step S303) and less than a minimum threshold value Nth_min (YES branching of a step S305), the report indicator generating unit 26 of the base station sets the second report execution probability Prep2 to a larger value (= Prep_large) (step S306).

When the number of reports received is not more than the maximum threshold value Nth_max (NO branching of the step S303) and not less than the minimum threshold value Nth_min (NO branching of the step S305), the report indicator generating unit 26 of the base station sets the second report execution probability Prep2 to a normal value (= Prep_normal) (step S307).

The report indicator generating unit 26 of the base station broadcasts the second report execution probability Prep2, thus determined, via the send data processing unit 23 and the radio transmitting/ receiving unit 21 (step S308).

After lapse of a certain predetermined time (step S309), the base station repeats the processing as from the processing of broadcasting the first probability (Prep1). This predetermined time is again managed by the timer, not shown.

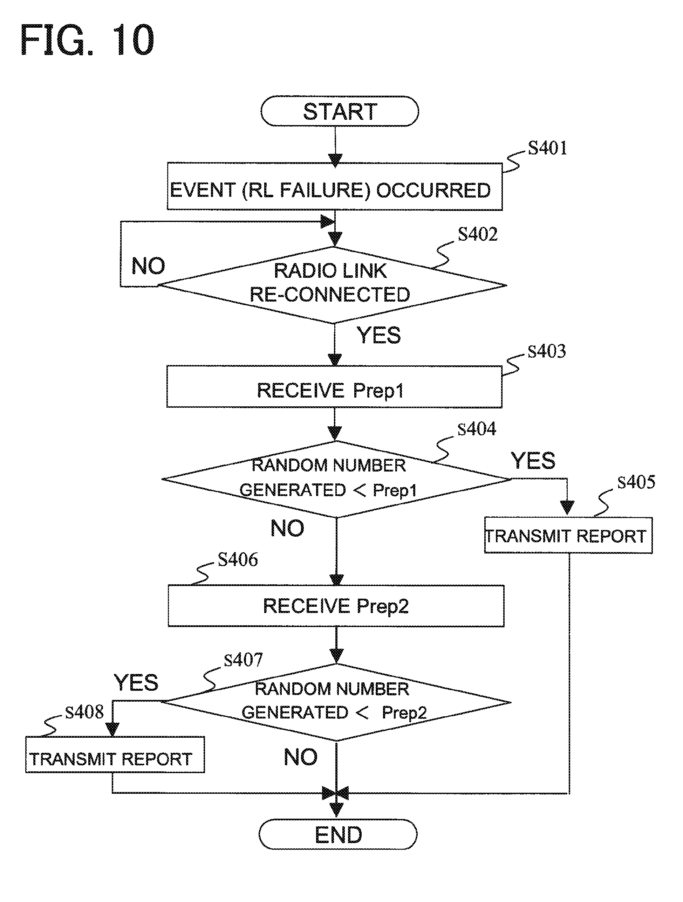

Fig.10 depicts a flowchart showing the sequence of reporting of the event that has occurred in the mobile station receiving the first report execution probability and the second report execution probability prepared by the sequence of Fig.9. Meanwhile, Fig.10 shows an event-based report transmission sequence of transmitting a report from the mobile station via a base station to the management server 4 on occurrence of an event that is to become a trigger for reporting. The report transmission sequence in the mobile station will now be described with reference to Fig.10 and to Fig.5 showing the configuration of the mobile station.

Suppose that an event such as a radio link failure has occurred (step S401). In the mobile station, the event, such as a loss of link connection (a radio link failure), is detected by, for example, the link connection control unit 35, and notified to the measurement data report control unit 39. The sort of the event that has occurred (a radio link failure), a measured result of the communication state at the time of the occurrence, measured by the measurement control unit 37, the position information of the mobile station, acquired by the GPS receiving unit 36, the mobile station ID information (TMSI), the time information and so on, are stored in the measurement data storage unit 38, under control by the measurement data report control unit 39.

When the connection of the radio link is re-established (YES branching of the step S402), the measurement data report control unit 39 is responsive to a notification from the link connection control unit 35 to enter into a state of waiting for reception of the first report execution probability Prep1 broadcasted by the base station. On receipt of the first report execution probability Prep1, transmitted from the base station, by the received data processing unit 32 via the radio transmitting/ receiving unit 31 (step S403), the measurement data report control unit 39 generates a random number. When the random number generated is less than the first report execution probability Prep1 (YES of step S404), the measurement data report control unit 39 of the mobile station transmits a report on the monitor result, retained by the measurement data storage unit 38, via the transmission data processing unit 33 and the radio transmitting/receiving unit 31 to the base station (step S405).

In case the random number is not less than the first report execution probability Prep1 (NO of step S404), the measurement data report control unit 39 of the mobile station does not transmit a report, and is in a state of waiting for receipt of the second report execution probability Prep2.

When the received data processing unit 32 of the mobile station has received the second report execution probability Prep2 from the base station via the radio transmitting/ receiving unit 31 (step S406), the measurement data report control unit 39 of the mobile station generates a random number. In case the random number generated is not less than the second report execution probability Prep2 (NO of step S407), no report is transmitted, such that report transmission is stopped. If conversely, the random number generated is less than the second report execution probability Prep2 (YES of step S407), the measurement data report control unit 39 of the mobile station transmits a report on the monitor result, stored in the measurement data storage unit 38, via the transmission data processing unit 33 and the radio transmitting/ receiving unit 31 to the base station (step S408).

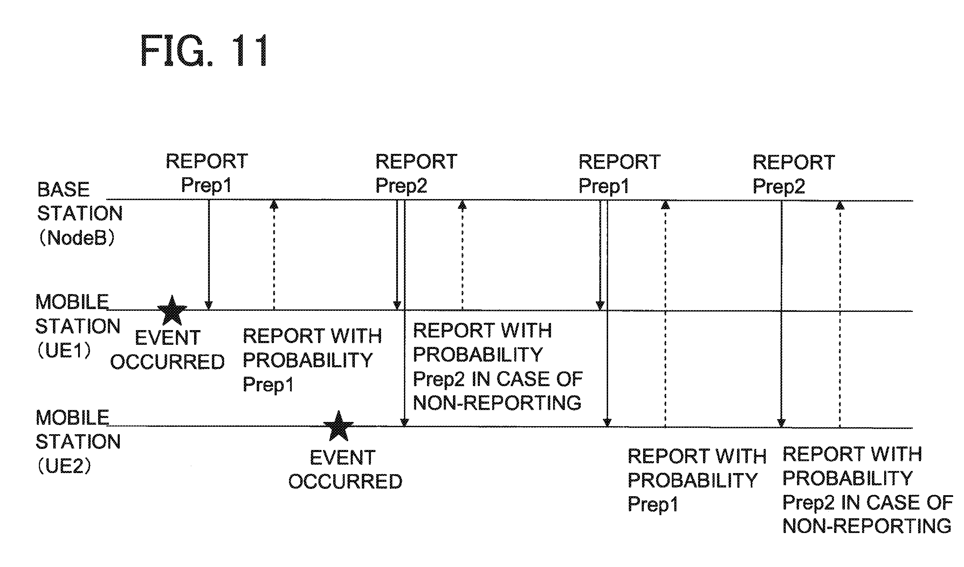

Fig.11 shows an example sequence of transmitting the report execution probability from the base station and the reporting from the mobile station of the exemplary embodiment explained with reference to Figs.9 and 10.

An event occurs in a first mobile station (UE1; User Equipment1). Meanwhile, the UE, an acronym of User Equipment, is a mobile station in the third generation mobile phone.

After re-establishment of connection of the radio link, the first mobile station (UE1) receives the first report execution probability Prep1 broadcasted by the base station (NodeB).

The first mobile station (UE1) reports with the first report execution probability Prep 1.

The base station (NodeB) receives the reports for a predetermined time and determines the second report execution probability Prep2 depending on the number of reports received.

An event then occurs in a second mobile station (UE2).

The base station (NodeB) broadcasts the second report execution probability Prep2.

After re-establishment of the radio link, the second mobile station (UE2) receives the second report execution probability Prep2 broadcasted by the base station (NodeB). The first mobile station (UE1) also receives this second report execution probability Prep2.

The first mobile station (UE1) has reported with the first report execution probability Prep 1. However, if the random number is not less than the first report execution probability Prep1, such that no report has been sent, the first mobile station transmits the report with the second report execution probability Prep2.
On the other hand, the second mobile station (UE2) does not report an event because the second mobile station (UE2) has not received the first report execution probability Prep1.

The base station (NodeB) then broadcasts the first report execution probability Prep1.

The second mobile station (UE2) receives the first report execution probability Prep1, broadcasted by the base station (NodeB), and reports with the first report execution probability Prep1.

The base station (NodeB) receives reports for a predetermined time and, depending on the number of the reports received, determines the second report execution probability Prep2 to broadcast the second report execution probability Prep2.

The second mobile station (UE2) receives the second report execution probability Prep2. If the second mobile station has not reported, it reports with the second report execution probability Prep2.

The base station alternately broadcasts the first report execution probability and the second report execution probability, as shown in Fig.11. After re-establishment of the link connection, the mobile station waits for reception of the first report execution probability, and reports with the first report execution probability. If the mobile station has not reported with the first report execution probability, it reports with the next second report execution probability.

If there are larger numbers of unnecessary reports from the mobile stations, the base station sets the second report execution probability to a smaller value and broadcasts the value of the second report execution probability. Thus, from that time on, the number of the unnecessary reports decreases. If conversely the number of the unnecessary reports is small, the base station sets the second report execution probability to a larger value and broadcasts the large value of the second report execution probability. Hence, the reports from the mobile station occur with a higher probability value. It is thus possible to prevent the radio traffic due to report concentration from the mobile stations from increasing.

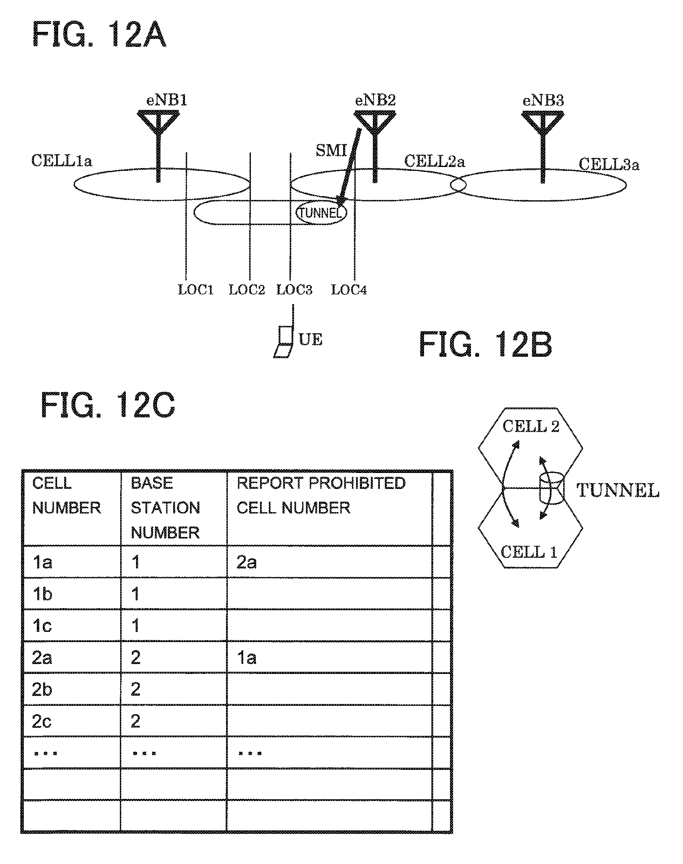

Figs.12A to 12C illustrate another exemplary embodiment of the present invention. Referring to Fig.12A, there is a tunnel between a cell 1a (Cell1a) and a cell 2a (Cell2a). In the cell 1a (Cell1a), the mobile station enters the tunnel to suffer a radio link failure. If, in this case, the mobile stations of users in vehicles exit the tunnel report unanimously, the traffic of the radio network increases.

Thus, in the present exemplary embodiment, there is provided a table (list), each row of which includes fields (columns) of cell number, base station number and report prohibited cell number as one entry. This table is prepared by the management server (4 of Fig.3) and is broadcasted by the base station corresponding to the report prohibited cell to the mobile stations as being the report prohibiting information.

For example, the management server (4 of Fig.3) instructs a base station (eNB1) to broadcast in the cell 1a the cell 2a as being the report prohibiting information.

The cell 2a has been registered as being the report prohibited cell for the cell 1a (see Fig.12C). The management server (4 of Fig.3) instructs a base station (eNB2) to broadcast in the cell 2a the cell 1a as being the report prohibiting information.

When the mobile station (UE) from the cell 1a has traversed the tunnel, and is re-connected to the radio link in the cell 2a, the base station (eNB2) issues a report prohibit indication (report discard indicator (DSI)) to the mobile station (UE). The mobile station (UE) refrains from reporting.

On the other hand, if the mobile station (UE) has moved from the cell 1b to the cell 2a, without traversing the tunnel, an event that has occurred in the mobile station (UE) in the cell 1b is reported in the cell 2a, because the cell 2a is not the report prohibited cell with respect to the cell 1b. That is, no limitation is imposed on reporting on movements between cells insofar as the tunnel is not traversed, as shown in Fig.12B.

Fig.12C shows an example list of the report prohibiting information stored and managed by a management server. The report prohibiting information includes a cell number, a base station number and a report prohibited cell number as an entry. The cell 1a is registered as a report prohibited cell for the cell 2a, while the cell 2a is registered as a report prohibited cell for the cell 1a. For example, if the mobile station (UE) has passed through the tunnel from the cell 2a and is re-connected to the link in the cell 1a, a report prohibition indicator is made from the base station (eNB1) to the mobile station (UE). If the mobile station (UE) has moved from the cell 2b to the cell 1a, without traversing the tunnel, an event that has occurred in the mobile station in the cell 2b is reported at the cell 1a, because the cell 1a is not a report prohibited cell with respect to the cell 2b.

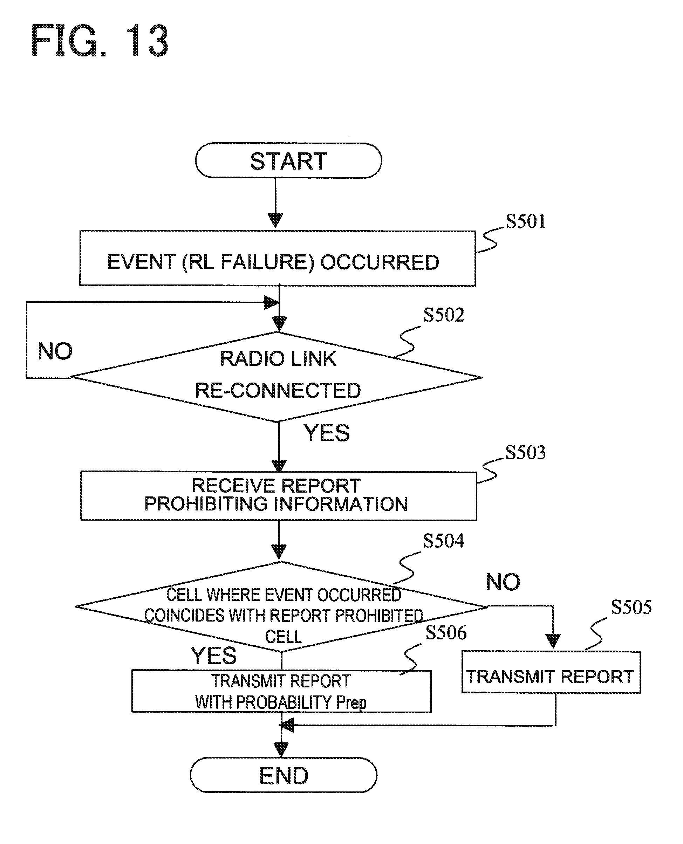

Fig.13 depicts a flowchart showing the control sequence for transmitting a report at a mobile station according to the present exemplary embodiment. Fig.13 shows an event-based report transmission sequence of transmitting a report from the mobile station via the base station to the management server in case of occurrence of an event that is to be a trigger for reporting. The sequence of controlling the report transmission from the mobile station will now be described with reference to Fig.13 and to Fig.5 that illustrates the configuration of the mobile station.

An event such as a radio link failure occurs (step S501). In the mobile station, the event, such as a loss of link connection (a radio link failure), is detected by, for example, the link connection control unit 35, and notified to the measurement data report control unit 39. The sort of the event that has occurred (a radio link failure), a measured result of the communication state at the time of the occurrence, measured by the measurement control unit 37, the position information of the mobile station, acquired by the GPS receiving unit 36, the mobile station ID information (TMSI), the time information and so on, are stored in the measurement data storage unit 38, under control by the measurement data report control unit 39.

When the connection of the radio link is re-established (YES branching of the step S502), a corresponding notification from the link connection control unit 35 is supplied to the measurement data report control unit 39. In response thereto, the measurement data report control unit 39 receives the report prohibiting information from the base station, which has been received by the received data processing unit 32 via the radio transmitting/ receiving unit 31 (step S503).

In case the cell, where the event has occurred, is not coincident with the report prohibited cell of the report prohibiting information received (NO branching at a step S504), the measurement data report control unit 39 transmits a report regarding the event via the transmission data processing unit 33 and the radio transmitting/receiving unit 31 to the base station (step S505). Meanwhile, the report regarding the event is a report stored in the measurement data storage unit 38.

In case the cell, where the event has occurred, is coincident with the report prohibited cell of the report prohibiting information received (YES branching at a step S504), the measurement data report control unit 39 transmits a report regarding the event via the transmission data processing unit 33 and the radio transmitting/receiving unit 31 to the base station, in accordance with the report execution probability Prep received from the base station (step S506). The execution probability (Prep) is received by the radio transmitting/receiving unit 31 and the received data processing unit 32. It should be noted that the execution probability (Prep) is transmitted over a common channel and received by the mobile station. If the execution probability (Prep) has been set to 0, the report transmission is stopped. The step S506 (control of the report based on the probability by Prep) may be dispensed with, such that, if the cell, where the event has occurred, is coincident with the report prohibited cell of the report prohibiting information (YES branching at a step S504), the measurement data report control unit 39 of the mobile station may prohibit the reporting.

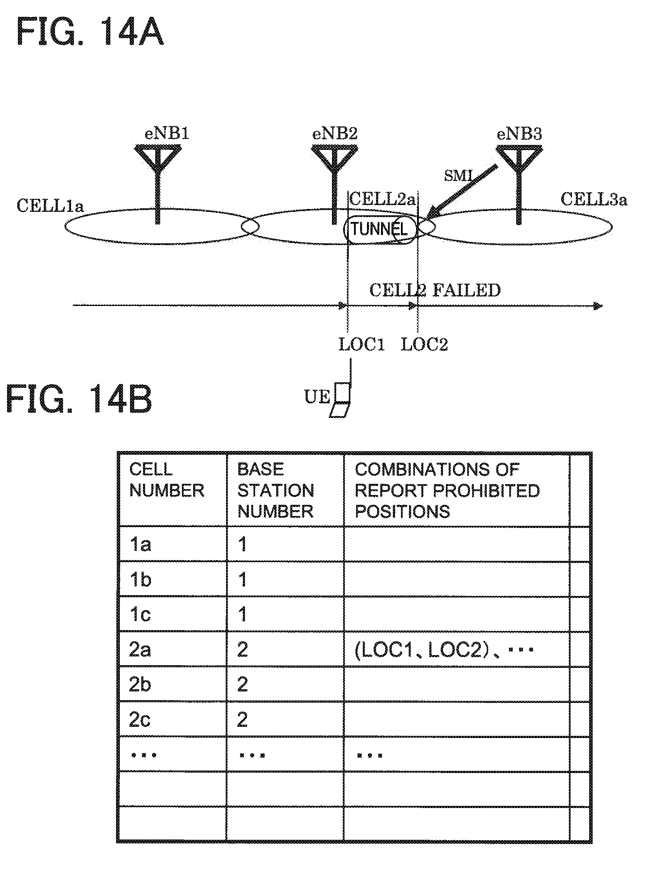

Fig.14 illustrates still another exemplary embodiment of the present invention. In the present exemplary embodiment, a report prohibited cell is registered in a given cell, and an event that occurred in such given cell is controlled so as not to be sent to the report prohibited cell. In the present exemplary embodiment, report prohibiting control is exercised not on the cell basis but from one location in the cell to another.

The management server (4 of Fig.3) includes a table (list) including, as one entry, a combination of a cell number, a base station number and a report prohibit position, as shown in Fig.14B.

For the cell 2a, (LOCI, LOC2) is registered as the report prohibiting information. (LOCI, LOC2) includes the information regarding the longitude, latitude and the radius.

If, with the mobile station, the site where an event, such as a radio link failure, has occurred (the position detected by the GPS receiving unit 36) is separated from the site of LOCI by a distance less than the radius, the site where the event has occurred is determined to be coincident with LOCl.

If, in the cell 2a, the mobile station has entered a tunnel, an event such as a radio link failure occurs and the radio link is re-connected in LOC2, or if the base station eNB2 fails, a base station eNB3 broadcasts the report prohibiting information (report discard indicator (DSI)) to the mobile station. The mobile station (UE) receives the report prohibiting information (report discard indicator (DSI)) to stop the reporting.

If conversely the mobile station (UE) has entered the tunnel from the side LOC2 into the tunnel to exit the tunnel in LOCI, where it is re-connected to the radio link, the base station (eNB2) broadcasts the report prohibiting information (report discard indicator (DSI)). The mobile station (UE) receives the report prohibiting information (report discard indicator (DSI)) to stop its reporting.

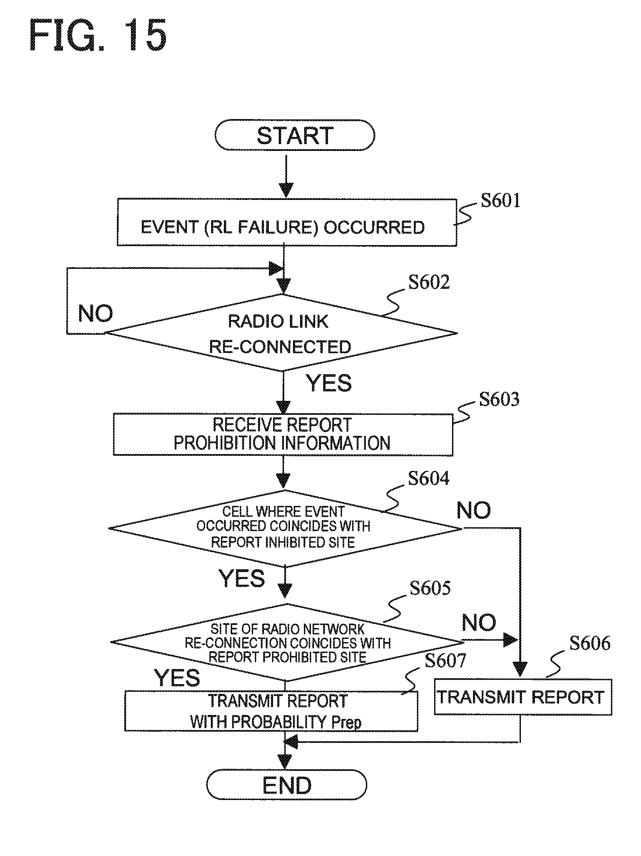

Fig.15 depicts a flowchart for illustrating the control for reporting the event information of the mobile station in the present exemplary embodiment. Specifically, Fig.15 shows the sequence of event-based transmitting of a report from the mobile station via the base station to the management server in case an event that is to be a trigger for reporting has occurred. The control sequence of transmitting the report from the mobile station will now be described with reference to Fig.15 and to Fig.5 that shows the configuration of the mobile station.

An event such as a radio link failure occurs (step S601). In the mobile station, the event, such as a loss of link connection (a radio link failure), is detected by, for example, the link connection control unit 35, and notified to the measurement data report control unit 39. The sort of the event that has occurred (a radio link failure), a measured result of the communication state at the time of the occurrence of the event, measured by the measurement control unit 37, the position information of the mobile station, acquired by the GPS receiving unit 36, the mobile station ID information (TMSI), the time information and so on, are stored in the measurement data storage unit 38, under control by the measurement data report control unit 39.

When the connection of the radio link is re-established (YES branching of the step S602), the measurement data report control unit 39 receives the report prohibiting information from the base station0, received via the radio transmitting/ receiving unit 31 by the received data processing unit 32 (step S603).

If the site of the event occurrence is coincident with none of the report prohibited sites of the report prohibited site pair in the report prohibiting information received (NO branching in the steps S604 and S605), the measurement data report control unit 39 transmits the report on the event that has occurred. This report on the event, that is, the report stored in the measurement data storage unit 38, is transmitted via the transmission data processing unit 33 and the radio transmitting/ receiving unit 31 to the base station (step S606).

If the site where the event has occurred is coincident with one of the report prohibited sites of the report prohibited site pair in the report prohibiting information received (YES branching in the step S604), and the site where the radio link has been re-established is coincident with the other report prohibited site (YES branching in the step S605), the measurement data report control unit 39 of the mobile station transmits a report on the event (step S607). The measurement data report control unit transmits this report via the transmission data processing unit 33 and the radio transmitting/ receiving unit 31 to the base station with the execution probability (Prep) as received from the base station. Meanwhile, the execution probability (Prep) is transmitted on the above mentioned common channel and received by the mobile station. If the execution probability (Prep) is set to 0, the report is not sent.

The step S607 (control of the report based on the probability by Prep) may be dispensed with, such that, if the site, where the event has occurred, and the site of re-establishment of the radio link, are coincident with the report prohibited site pair in the report prohibiting information (YES branching in the step S605), the measurement data report control unit 39 of the mobile station may prohibit the reporting.

If, in the present exemplary embodiment, a given cell has disappeared due to a failure in a base station and the like, such disappearance may be detected by a base station around the so failed base station. The detecting base station may then perform control to add the disappearing cell to a group of the report prohibited cells. Specifically, the base station different from the failed base station may notify the management server of the cell that has disappeared. The management server then registers the report prohibited cell in the table of the report prohibiting information.

If, in the present exemplary embodiment, the base station has deleted a cell (stopped transmission over a common pilot channel), the base station may notify the neighbor base stations of the information regarding the cell deletion over a wired communication line that connects the base stations. The neighbor base stations then add the deleted dell to the group of the report prohibited cells. The management server receives the notification from the neighbor base station to register the report prohibited cell in the table of the report prohibiting information.

If, in the present exemplary embodiment, the base station or the management server has received larger numbers of reports of the same content, that is, reports with the same event sort and with the same site of occurrence, the base station or the management server may broadcast the purport that the reports of the same content are unneeded. Specifically, the base station or the management server may automatically generate the combination of the report prohibited cell numbers and the report prohibited positions, from the reports of the same contents, from one event sort to another.

If, in the present exemplary embodiment, the management server removes the report prohibited cell from the list, the report execution probability Prep, broadcasted by the base station, may be gradually increased from zero until it is ultimately 1, in a controlled manner.

A case in which the present exemplary embodiment is applied to SON (self organizing/ optimizing networks), provided with a SON server, will now be described. In the present case, the report on the monitor result in above exemplary embodiment is called 'SON measurement report' (see Non-Patent Document 1).

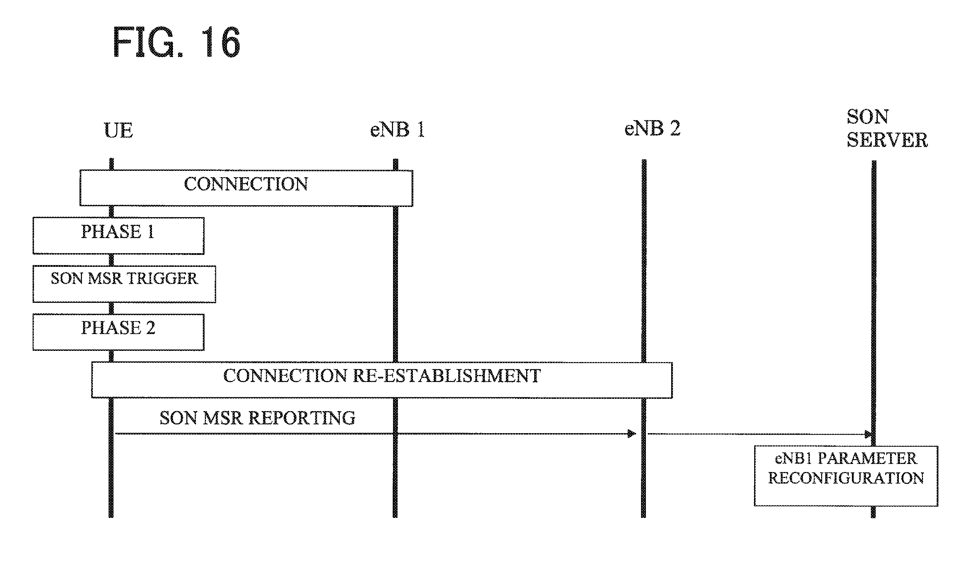

Referring to Fig.16, the mobile station (UE) is connected over a radio link to the base station (eNB1). When a radio link failure occurs in the radio link, it becomes a trigger of SON measurement (SON Measurement (MSR) trigger). A phase 1 corresponds to a state the cell has become invisible to the mobile station, and a phase 2 corresponds to the time the mobile station searches not for the current cell but searches for another cell after the end of the phase 1. When the connection with the base station eNB2 is re-established (Connection re-establishment), a SON measurement report is transmitted to the base station eNB2 and then supplied to a management server (SON server). The management server (SON server) reconfigures radio parameters of the base station (eNB1) (eNB1 parameter reconfiguration). If the mobile station has entered a tunnel, or the base station has failed, the number of reports (SON measurement report) is increased at the time of the link re-establishment, as set out above. In this case, control is performed to suppress the transmitting of reports in accordance with the present invention.

With the present proposal, if the network instructs the non-allowance of the SON measurement report related with a position (A) where there is a cell (K) and a position (B) where there is another cell (L), the mobile station (UE) discards the report (SON measurement report) which has been buffered in the mobile station (UE). Otherwise, the mobile station (UE) transmits the report (SON measurement report) which has been buffered in the mobile station (UE) to the network. It is noted that, that the network instructs means that the management server, for instance instructs, in above described exemplary embodiment or exemplary embodiment. However, the instructing part or component of the network is not limited to the management server, and a base station, for example, constituting the network, may, of course, be an instructing part or component. The SON measurement report related with the position (A) where there is the cell (K) and the position (B) where there is the other cell (L) may, for example, be the monitor result of the link connection failure in case a link connection failure occurs at the location (A) in the cell (K) and the link connection is re-established at the location position (B) of the other cell (L).

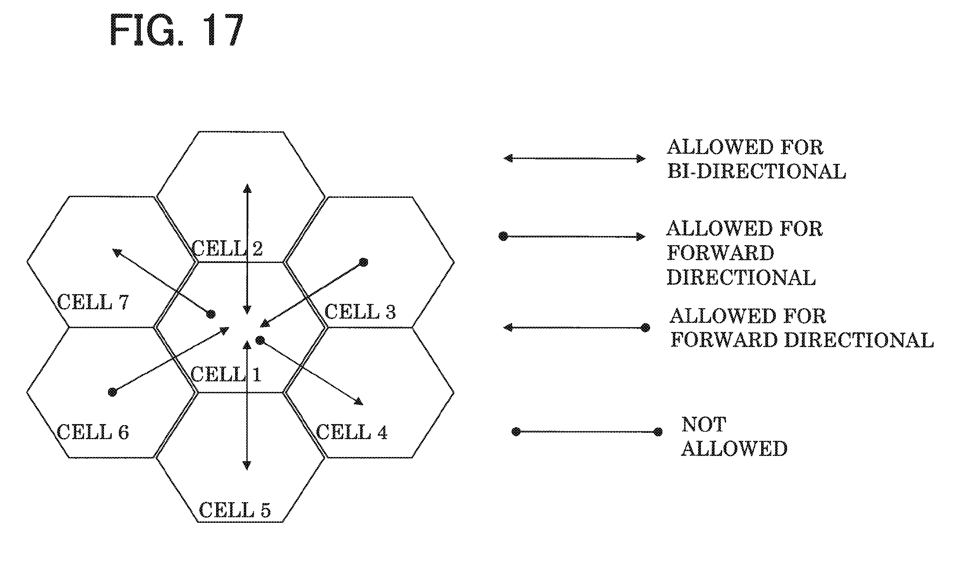

One cell surrounded by six neighbor cells, shown in Fig.17, will now be considered without loss of generality. Each cell of a cell pair indicates to the mobile station (UE) whether or not a report on connection failure (SON measurement report) to a given counterpart cell is allowed.

The report (SON measurement report) related to cell pairs of (Cell1, Cell2) and (Cell1, Cell5) are allowed for bi-directional.

A forward directional prohibition is imposed for cell pairs (Cell1, Cell3) and (Cell1, Cell6) and reports of from Cell1 to Cell3 and from Cell1 to Cell6 are prohibited.

The cell pairs of (Cell1, Cell7) and (Cell1, Cell4)has the reverse directional prohibition and reports from Cell7 to Cell1 and from Cell4 to Cell1 are prohibited.

In the present invention, the concept of cell-pair may further be extended to the notion of a location pair. The location pair may be defined as a pair of locations within a network where the mobile station (UE) loses its connection to the network and is re-connected to the network. The location may be in terms of cell, as explained in the cell-pair example above. Alternatively, a GPS location or a combination of GPS location and cell may be used.

The concept 'cell' may comprise a frequency domain.

The combined GPS and cell description of location may provide most detailed information on at where the mobile station lost its connection and re-established the connection to the network.

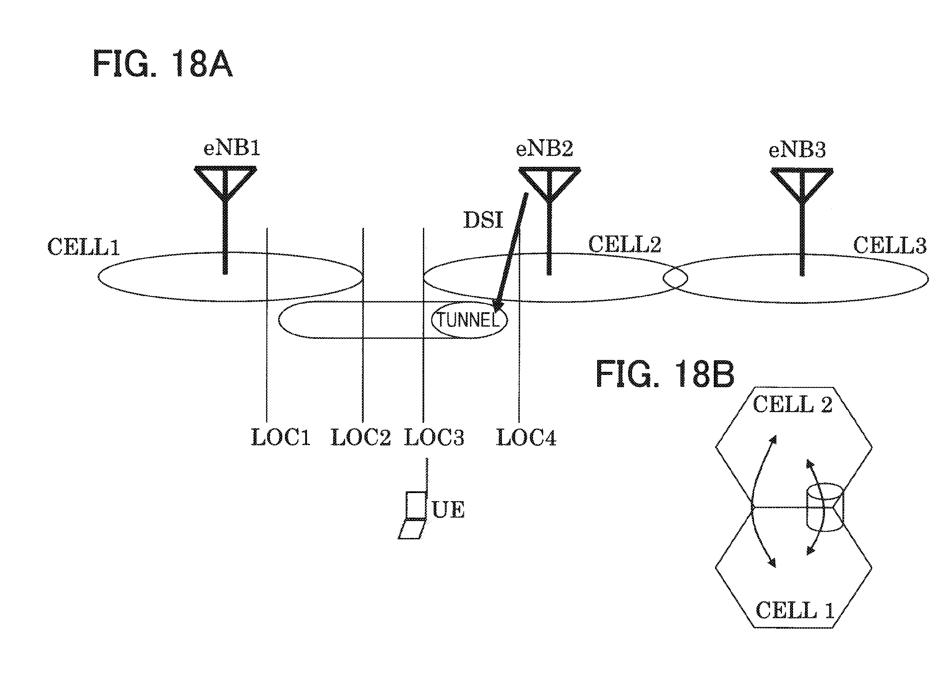

Referring to Fig.18, the mobile station (UE), passing through a tunnel, and thus lost its connection to the network, is re-connected to the network. The mobile station (UE) reads the broadcasting information DSI (Discard Indicator) from the base station (eNB2) to the effect that a report (SON measurement report) between the cell pair (Cell1, Cell2) is not allowed. The mobile station (UE) does not report to the management server and discards the report (SON measurement report) buffered therein. By the mobile station discarding the report buffered therein can reduce the burden of the mobile station (UE) and the network.

Report prohibition is carried out between the cells of the cell pair or, in a more detailed manner, between a GPS location and the cell pair. If the report prohibition is carried out on the cell pair basis, the total of the reports (SON measurement report) is prohibited between the cells 1 and 2. If there is an alternative route other than the tunnel that connects the cells 1 and 2, and such alternative route has a coverage hole that may be corrected by adjustment of the transmission power of the cells 1 and 2, no report that may optimize such alternative route is allowed in the case of the cell pair based report prohibition control. In other words, the cell pair based report blocking may disable self-optimization of the cell 1- cell 2. In case the base station (eNB2) specifies a report prohibition area in terms of the GPS location plus cell pair combination, reports (SON measurement report) for optimizing an alternative route are allowed, while blocking the SON measurement report on a pair of undesirable positions.

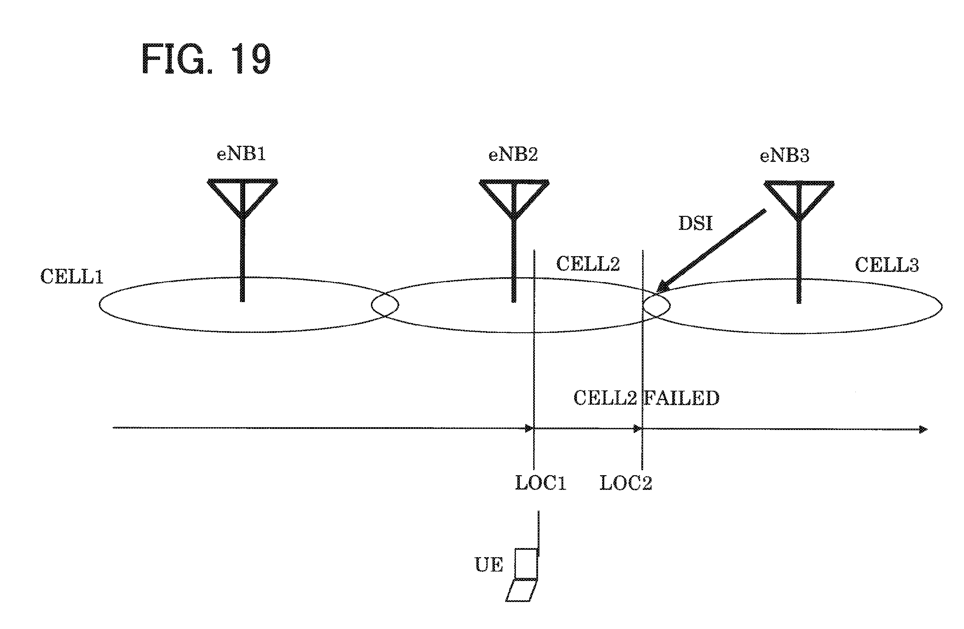

Next, a cell failure will be considered. When the mobile station (UE) is re-connected to a new cell and the mobile station (UE) discards the report (SON measurement report), the case of the cell failure would be solved. This is made possible by an indicator for report prohibition from a new base station (eNB), as in the above mentioned tunnel case. It is assumed that the base station failure (cell failure) has occurred at the location LOCI in the cell 2 and the link-connection has been re-established at the location LOC2, as shown in Fig.19. The cell pair based report prohibition control (report prohibit position pair of Fig.12C) and the GPS plus cell pair based report prohibition control (report prohibit position pair of Fig.14B) may be thought of. However, the cell pair based control is more efficient because the mobile station (UE) that has lost its connection to the network on occurrence of the cell failure, is randomly located in the cell 2. That is, more detailed location based report prohibition is unnecessary.

For a cell failure case, the failed base station eNB may indicates the failure to the neighbor cells. The neighbor cells are able to autonomously detect the cell failures by a periodic health check (health check functions between base stations e(NB)).

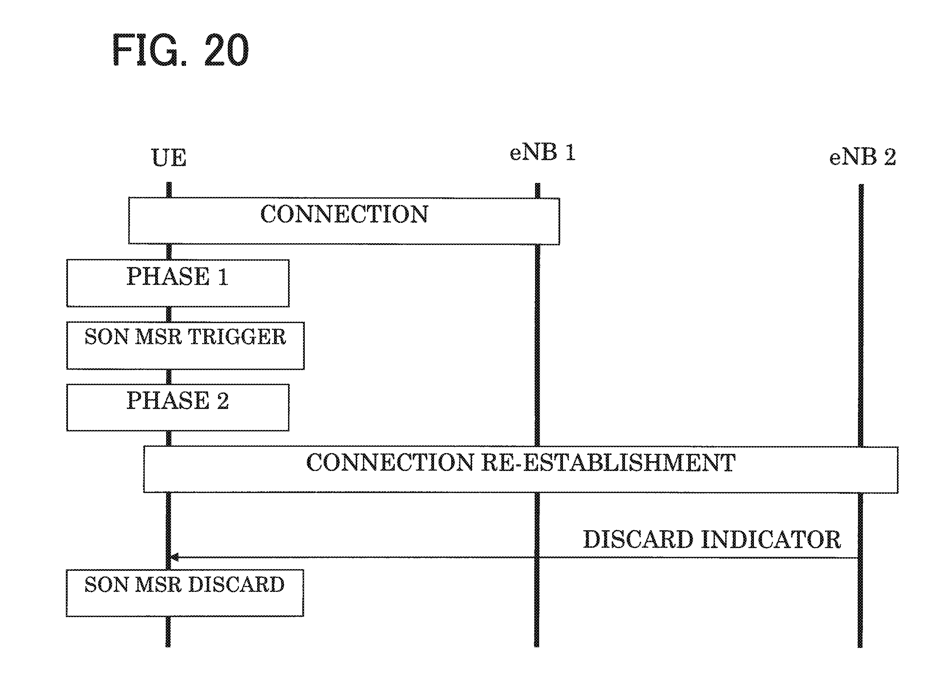

Fig.20 shows an example sequence of message exchange between network nodes according to the present invention.

A mobile station (UE) transmits a report on measurement immediately after re-connection to the network. The mobile station (UE) is to be able to transmit a report only during the time other than the time of re-connection. However, the present proposal is not particularly concerned with report timing. Rather, there should be time for canceling the measurement report. It should be possible to cancel the measurement report independently of report timing. When an event, such as a radio link failure, has occurred, the mobile station (UE) receives a discard indicator (DSI) from the base station 2 (eNB2) after re-establishment of the link connection to the base station 2 (eNB2). The mobile station (UE) then discards the report (SON measurement report).

### INDUSTRIAL UTILIZABILITY

The present invention may be applied to a communication system in which unneeded reporting is prohibited and suppressed to prevent the burden of the network from increasing.

The particular exemplary embodiments or examples may be modified or adjusted within the gamut of the entire disclosure of the present invention, inclusive of claims, based on the fundamental technical concept of the invention. Further, variegated combinations or selections of the elements disclosed herein may be made within the framework of the claims. That is, the present invention may encompass various modifications or corrections that may occur to those skilled in art within the gamut of the entire disclosure of the present invention, inclusive of claim and the technical concept of the present invention.

## Claims

1. A radio communication system comprising:
a base station that broadcasts a probability of a mobile station reporting to the base station a monitor result of communication status acquired by the mobile station; and
the mobile station, wherein
the mobile station receives the probability broadcasted by the base station and performs control so as to report the monitor result to the base station in accordance with the probability.

2. The radio communication system according to claim 1, wherein the base station variably sets the probability based on traffic from the mobile station towards the base station, and wherein
the mobile station controls reporting of the monitor result to the base station based on magnitude relationship between the random number generated by the mobile station and the probability received from the base station.

3. The radio communication system according to claim 1, wherein the probability assumes a value ranging from 0 to 1,
the base station measuring uplink traffic and setting the probability to 0 to broadcast the so set probability to prohibit the mobile station from reporting if the uplink traffic is more than a predetermined threshold value,
the base station setting the probability to 1 and broadcasting the so set probability to allow the mobile station to report the monitor result, if the uplink traffic is not more than the predetermined threshold value and traffic of reports from the mobile station is less than another threshold value predetermined in relation to the number of reports made, and
the base station setting the probability to a value relatively close to 0 and broadcasting the so set probability to suppress the mobile station from reporting, if the uplink traffic is not more than the predetermined threshold value and the traffic of reports is not less than the another threshold value.

4. The radio communication system according to claim 1 or 3, wherein the mobile station, responsive to the probability from the base station, generates a random number corresponding to a range that can be assumed by the probability,
the mobile station making reporting in case the random number generated is less than the probability received from the base station;
the mobile station, in case the random number generated is not less than the probability received from the base station, receiving the probability from the base station and comparing the probability with the random number generated until such time that reporting is made within a maximum number of times of retry operations or such time that the maximum number of times of retry operations is reached as reporting is not made, and
the mobile station stopping reporting in case the maximum number of times of retry operations is exceeded as reporting is not made.

5. The radio communication system according to claim 1, wherein
the base station alternately broadcasts, as the probability, a predetermined first probability of a fixed value, and a second probability in this order, wherein
the second probability is variably set after broadcasting the first probability in accordance with the number of reports received from the mobile station within a predetermined time from the broadcasting of the first probability.

6. The radio communication system according to claim 5, wherein the mobile station waits for reception of the first probability from the base station, on re-connection to a radio link after an occurrence of an event inclusive of a radio link failure and controls reporting in accordance with the first probability received,
the mobile station, in case the report is not made in accordance with the first probability, receiving the second probability from the base station to control the reporting in accordance with the second probability.

7. The radio communication system according to claim 5, wherein the mobile station, on receipt of the first probability from the base station, generates a random number in a range of values that can be assumed by the first probability,
the mobile station making reporting in case the random number is less than the first probability,
in case the random number is not less than the first probability, the mobile station receiving the second probability from the base station and generating a random number in a range of values that can be assumed by the second probability, and
the mobile station making reporting in case the random number is less than the second probability, while the mobile station stopping reporting in case the random number is not less than the second probability.

8. A radio communication system, in which a mobile station, that met a radio link failure at a first site and that has re-established link connection at a second site, reports a monitor result of the radio link failure to a base station, wherein
the mobile station suppresses or stops the reporting to the base station of the monitor result of the radio link failure, based on an indication from the base station, in case the combination of the first and second sites is such one as determined to suppress reporting from the mobile station to the base station of the monitor result of the radio link failure.

9. The radio communication system according to claim 8, comprising:
a means that stories and manages, as reporting prohibiting information, information to the effect that the combination of the first and second sites is such one that is for prohibiting reporting from the mobile station to the base station.

10. The radio communication system according to claim 9, wherein the site is defined on the cell basis, the first and second sites being first and second cells, respectively.

11. The radio communication system according to claim 9, wherein the first and second sites are related with cells, and are first and second positions defined in a range narrower than the cell.

12. The radio communication system according to claim 11, wherein the mobile station suppresses or stops the reporting, if, when the mobile station met a radio link failure at the first position and has re-established connection to a radio link at the second position,
the first position is defined in the report prohibiting information broadcasted by the base station, as one of pair positions determined for a cell as being the subject for report suppression and the second position is defined as being the other of the pair positions.

13. The radio communication system according to any one of claims 8 to 12, wherein the mobile station in suppressing the reporting reports with a predetermined probability.

14. The radio communication system according to any one of claims 1 to 13, wherein the monitor result include information on an event that becomes a trigger for reporting and/or measurement result of communication status that become a trigger for reporting.

15. A radio communication system, wherein
a mobile station discards a report buffered therein in case a network indicates that reporting of measurement, which is related with a position in one cell and another position in another cell is not allowed.

16. The radio communication system according to claim 15, wherein the mobile station, that lost a connection thereof to a network in passing through a tunnel, discards a report buffered therein after re-connection thereof to the network, based on broadcast information from the base station to the effect that reporting between a cell where the mobile station lost connection thereof to the network and another cell where the mobile station has been re-connected to the network is not allowed.

17. The radio communication system according to claim 15, wherein the position of the one cell and that of the another cell are indicated as a cell pair.

18. The radio communication system according to claim 15, wherein the position of the one cell and that of the another cell are indicated as a pair combination of a GPS (Global Positioning System) position and a cell.

19. A radio communication system, wherein a failure in a cell is managed on the basis of a report prohibited cell pair, and wherein
a mobile station discards a report buffered therein based on the information broadcasted by a base station to the effect that reporting between a cell pair of a cell wherein the mobile station lost its connection to a network and another cell wherein the mobile station is re-connected to the network is not allowed.

20. The radio communication system according to claim 19, wherein cells neighboring to a failed cell autonomously detect the failed cell by periodic health check among a plurality of base stations.

21. A method for radio communication comprising the steps of:
a base station broadcasting a probability of a mobile station reporting to a base station a monitor result of communication status monitored by the mobile station; and
the mobile station receiving the probability broadcasted by the base station to report the monitor result to the base station in accordance with the probability.

22. A method for radio communication in which mobile station that met a radio link failure at a first site and that has re-established connection to a link at a second site reports a monitor result of the radio link failure to the base station, the method comprising the steps of:
the mobile station receiving an indication from the base station if the combination of the first and second sites is such one determined to suppress reporting of the monitor result of the radio link failure; and
the mobile station suppressing or stopping reporting to the base station based on the indication.

23. The method for radio communication according to claim 22, wherein the mobile station in suppressing the reporting under an indication from the base station reports at a predetermined probability.

24. A method for radio communication, wherein a mobile station discards a report buffered therein, in case a network indicates that reporting a measurement which is related with a position in a position in one cell and a position in another position in another cell is not allowed.

25. The method for radio communication according to claim 24, wherein the mobile station that lost connection thereof to the network in passing through a tunnel discards a report buffered therein after the mobile station is re-connected to the network, based on broadcasted information received from a base station to the effect that reporting between a cell where the base station lost connection thereof to the network and a cell where the base station is re-connected to the network is not allowed.

26. The method for radio communication according to claim 24, wherein the position of the one cell and that of the another cell are indicated as a cell pair.

27. The method for radio communication according to claim 24, wherein the position of the one cell and that of the another cell are indicated as a pair combination of a GPS (Global Positioning System) position and a cell.

28. A method for radio communication, wherein
a failure in a cell is managed on the basis of a report prohibited cell pair, and wherein
a mobile station discards a report buffered therein based on information broadcasted by a base station to the effect that reporting between a cell pair of a cell wherein the mobile station loses connection thereof to a network and a cell wherein the mobile station is re-connected to the network is not allowed.

29. The method for radio communication according to claim 28, wherein cells neighboring to a failed cell autonomously detect the failed cell by periodic health check among a plurality of base stations.

30. A mobile station comprising:
a means that monitors communication status; and
a means that receives a probability broadcasted by a base station and that controls reporting to the base station of a monitor result acquired by the mobile station in accordance with the probability.

31. A base station comprising:
a means that determines a probability of a mobile station reporting to the base station of a monitor result of communication status acquired by the mobile station based on uplink traffic from the mobile station to the base station; and
a means that broadcasts the probability determined to the mobile station.

32. A mobile station comprising:
a means that monitors communication status;
a means that receives an indication from a base station; the indication indicating whether or not, in case a mobile station that met a radio link failure at a first site and that has re-established connection to a link at a second site reports a monitor result of the radio link failure to the base station, the combination of the first and second sites is such one determined to suppress reporting of the monitor result of the radio link failure to the base station; and
a means that suppresses or stops the reporting of the monitor result, based on the indication, in case the combination of the first and second sites is such one that is for suppressing the reporting of the monitor result.

33. A base station comprising:
a means that broadcasts an indication to prohibit reporting and that suppresses reporting to the base station in case the combination of a first site where a radio link failure occurred for a mobile station and a second site where connection of the mobile station to the network has been re-established after the failure occurred is registered in the report prohibiting information as being the combination that is for suppressing the reporting to the base station at the second site.

34. A mobile station which discards a report buffered therein in case a network indicates that reporting on measurement related with a position of a given cell and a position of another cell is not allowed.

35. The mobile station according to claim 34, wherein the mobile station discards a report buffered therein based on the report information from a base station to the effect that reporting on a cell pair, that is, a cell where the mobile station passed through a tunnel and thus lost connection thereof to a network and a cell where the mobile station is re-connected to the network, is not allowed.

36. The mobile station according to claim 34, wherein the position of the one cell and that of the another cell are indicated as a cell pair.

37. The mobile station according to claim 34, wherein the position of the one cell and that of the another cell are indicated as a pair combination of a GPS (Global Positioning System) position and a cell.

38. A mobile station, wherein a failure in a cell is managed on the basis of a report prohibited cell pair, and wherein
the mobile station discards a report buffered therein based on information broadcasted by a base station to the effect that reporting between a cell pair of a cell wherein the mobile station lost connection thereof to a network and a cell wherein the mobile station is re-connected to the network is not allowed.

39. A base station which causes a mobile station to discard a report buffered therein if a report on measurement related with a position of a given cell and a position of another cell is not allowed.

40. The base station according to claim 39, wherein the base station sends to a mobile station that passed through a tunnel and thus lost connection thereof to a network, the broadcasted information to the effect that reporting on a cell pair of a cell where the mobile station lost connection thereof to the network and another cell where the mobile station is re-connected to the network, is not allowed,
the base station causing the mobile station to discard the report buffered therein.

41. The base station according to claim 39, wherein the position of the one cell and that of the another cell are indicated as a cell pair.

42. The base station according to claim 39, wherein the position of the one cell and that of the another cell are indicated as a pair combination of a GPS (Global Positioning System) position and a cell.

43. A base station, wherein
a failure in a cell is managed on the basis of a report prohibited cell pair, and wherein
broadcast information to the effect that reporting between a cell pair of a cell wherein the mobile station lost connection thereof to a network and a cell wherein the mobile station is re-connected to the network is not allowed is transmitted to a mobile station to cause the mobile station to discard a report buffered therein.

44. The base station according to claim 43, wherein cells neighboring to a failed cell autonomously detect the failed cell by periodic health check among a plurality of base stations.

45. A management server comprising:
a means that broadcasts a probability of a mobile station reporting a monitor result of communication status acquired by the mobile station to a management server;
the mobile station receiving the probability broadcasted to report the monitor result to the management server in accordance with the probability.

46. A management server in which a mobile station met a radio link failure at a first site and has been re-connected to the network at a second site reports a monitor result of the radio link failure; wherein
in case the combination of the first and second sites is such one that is for suppressing reporting of the monitor result, the mobile station is caused to discard the report buffered therein.

47. A management server which causes a mobile station to discard a report buffered therein if a report on measurement related with a position of a given cell and the position of another cell is not allowed.

48. The management server according to claim 47, wherein if for a cell pair of a cell where the mobile station passes through a tunnel and loses connection thereof to the network and another cell where the mobile station is re-connected to the network, reporting is not allowed, the management server causes the mobile station to discard the report buffered therein.

49. The management server according to claim 47, wherein the position of the one cell and that of the another cell are indicated as a cell pair.

50. The management server according to claim 47, wherein the position of the one cell and that of the another cell are indicated as a pair combination of a GPS (Global Positioning System) position and a cell.

51. A management server, wherein
a failure in a cell is managed on the basis of report prohibited cell pair, and wherein
the mobile station is caused to discard a report buffered therein in case reporting between a cell pair of a cell wherein the mobile station loses connection thereof to a network and a cell wherein the mobile station is re-connected to the network is not allowed.

52. The management server according to claim 51, wherein cells neighboring to a failed cell autonomously detect the failed cell by periodic health check among a plurality of base stations.
